(19) **Europäisches Patentamt European Patent Office Office européen des brevets**

(11) **EP 4 280 729 B1**

(12) **EUROPEAN PATENT SPECIFICATION**

(45) Date of publication and mention of the grant of the patent:
**03.09.2025 Bulletin 2025/36**

(21) Application number: **22739621.5**

(22) Date of filing: **11.01.2022**

(51) International Patent Classification (IPC):
$H04W\ 72/02^{(2009.01)}$    $H04W\ 72/12^{(2023.01)}$
$H04W\ 72/04^{(2023.01)}$    $H04W\ 76/28^{(2018.01)}$
$H04W\ 4/40^{(2018.01)}$    $H04W\ 92/18^{(2009.01)}$
$H04W\ 72/542^{(2023.01)}$    $H04W\ 74/0808^{(2024.01)}$

(52) Cooperative Patent Classification (CPC):
**H04W 72/02; H04W 72/542; H04W 74/0808;**
H04W 72/25; H04W 92/18

(86) International application number:
**PCT/KR2022/000451**

(87) International publication number:
**WO 2022/154426 (21.07.2022 Gazette 2022/29)**

(54) **METHOD AND DEVICE FOR PERFORMING BURST TRANSMISSION IN NR V2X**

VERFAHREN UND VORRICHTUNG ZUR DURCHFÜHRUNG EINER BURST-ÜBERTRAGUNG IN NR V2X

PROCÉDÉ ET DISPOSITIF DE RÉALISATION DE TRANSMISSION EN RAFALE DANS NR V2X

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.01.2021 US 202163137058 P**
       **13.01.2021 US 202163137074 P**
       **13.01.2021 US 202163137073 P**
       **19.01.2021 KR 20210007457**
       **28.01.2021 US 202163142966 P**
       **28.01.2021 US 202163142978 P**

(43) Date of publication of application:
**22.11.2023 Bulletin 2023/47**

(73) Proprietor: **LG Electronics Inc.
Yeongdeungpo-gu
Seoul 07336 (KR)**

(72) Inventors:
• **KO, Woosuk
  Seoul 06772 (KR)**
• **SEO, Hanbyul
  Seoul 06772 (KR)**
• **LEE, Seungmin
  Seoul 06772 (KR)**

• **HWANG, Daesung
  Seoul 06772 (KR)**

(74) Representative: **Maikowski & Ninnemann
Patentanwälte Partnerschaft mbB
Postfach 15 09 20
10671 Berlin (DE)**

(56) References cited:
**US-A1- 2020 029 340**    **US-A1- 2020 029 340**
**US-A1- 2020 229 171**

• **HUAWEI, HISILICON: "Remaining details of sidelink resource allocation mode 2", 3GPP DRAFT; R1-2007612, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. E-meeting; 20201026 - 20201113, 17 October 2020 (2020-10-17), Mobile Competence Centre ; 650, route des Lucioles ; F-06921 Sophia-Antipolis Cedex ; France , XP051939817**

**(Cont. next page)**

- LG ELECTRONICS: "Discussion on resource allocation for power saving", 3GPP DRAFT; R1-2007895, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20201026 - 20201113, 24 October 2020 (2020-10-24), Mobile Competence Centre ; 650, route des Lucioles ; F-06921 Sophia-Antipolis Cedex ; France , XP051946543
- OPPO: "Discussion on remaining open issues in mode 2", 3GPP DRAFT; R1-2004074, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200525 - 20200605, 15 May 2020 (2020-05-15), Mobile Competence Centre ; 650, route des Lucioles ; F-06921 Sophia-Antipolis Cedex ; France , XP051885833
- CATT: "Discussion on feasibility and benefits for mode 2 enhancements", 3GPP DRAFT; R1-2005692, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200817 - 20200828, 8 August 2020 (2020-08-08), Mobile Competence Centre ; 650, route des Lucioles ; F-06921 Sophia-Antipolis Cedex ; France , XP051917667

Description

## TECHNICAL FIELD

This disclosure relates to a wireless communication system.

## BACKGROUND

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

Document D1: US 2020/029340 A1 (HE CHAO [US] ET AL) 23 January 2020 (2020-01-23) discloses a method for a user equipment (UE) comprising: receiving information to select resources for an aperiodic bursty traffic; performing, over a sensing window, a signal measurement of the received signals; identifying a resource selection window; and transmitting, via the sidelink, the bursty aperiodic traffic using the reserved resources.

Document D2: US 2020/229171 A1 (KHORYAEV ALEXEY [RU] ET AL) 16 July 2020 (2020-07-16) discloses a method for autonomous resource selection in new radio (NR) vehicle-to-everything (V2X) sidelink communication. A sensing-based method of resource selection is described, including a sensing window design and techniques for selecting resources and transmitting resource reservation information.

## DISCLOSURE

### TECHNICAL SOLUTION

In an embodiment, an operation method of a first device 100 in wireless communication system is proposed. The method may comprise: selecting a burst transmission resource, in a selection window, including a plurality of transmission resources, based on the sensing, wherein a first reference signal received power, RSRP, threshold used in selection for the burst transmission resource is greater than a second RSRP threshold used in selection for a non-burst transmission resource; transmitting, to a second device, sidelink control information, SCI, for scheduling of a physical sidelink shared channel, PSSCH, through a physical sidelink control channel, PSCCH, based on the burst transmission resource, wherein the SCI includes information related to the burst transmission resource; and transmitting, to the second device, a medium access control, MAC, protocol data unit, PDU, through the PSSCH, based on the burst transmission resource.

### ADVANTAGEOUS EFFECTS

The user equipment (UE) may efficiently perform SL communication.

### BRIEF DESCRIPTION OF THE DRAWINGS

FIG. 1 shows a structure of an NR system, based on an embodiment of the present disclosure.
FIG. 2 shows a radio protocol architecture, based on an embodiment of the present disclosure.
FIG. 3 shows a structure of a radio frame of an NR, based on an embodiment of the present disclosure.
FIG. 4 shows a structure of a slot of an NR frame, based on an embodiment of the present disclosure.
FIG. 5 shows an example of a BWP, based on an embodiment of the present disclosure.
FIG. 6 shows a procedure of performing V2X or SL communication by a UE based on a transmission mode, based on an embodiment of the present disclosure.

FIG. 7 shows three cast types, based on an embodiment of the present disclosure.

FIG. 8 shows an example of a burst resource according to an embodiment of the present disclosure.

FIG. 9 shows an example of a burst resource according to an embodiment of the present disclosure.

FIG. 10 is a figure for explaining why burst resource reservation is necessary.

FIG. 11 shows a procedure for performing wireless communication by a first device according to an embodiment of the present disclosure.

FIG. 12 shows a procedure for a second device to perform wireless communication according to an embodiment of the present disclosure.

FIG. 13 shows a communication system 1, based on an embodiment of the present disclosure.

FIG. 14 shows wireless devices, based on an embodiment of the present disclosure.

FIG. 15 shows a signal process circuit for a transmission signal, based on an embodiment of the present disclosure.

FIG. 16 shows another example of a wireless device, based on an embodiment of the present disclosure.

FIG. 17 shows a hand-held device, based on an embodiment of the present disclosure.

FIG. 18 shows a vehicle or an autonomous vehicle, based on an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

For terms and techniques not specifically described among terms and techniques used in this specification, a wireless communication standard document published before the present specification is filed may be referred to.

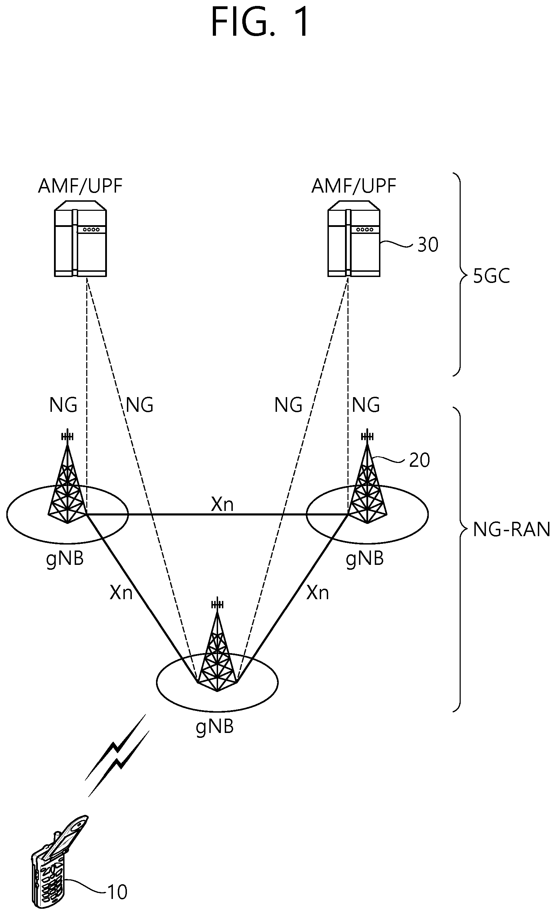

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

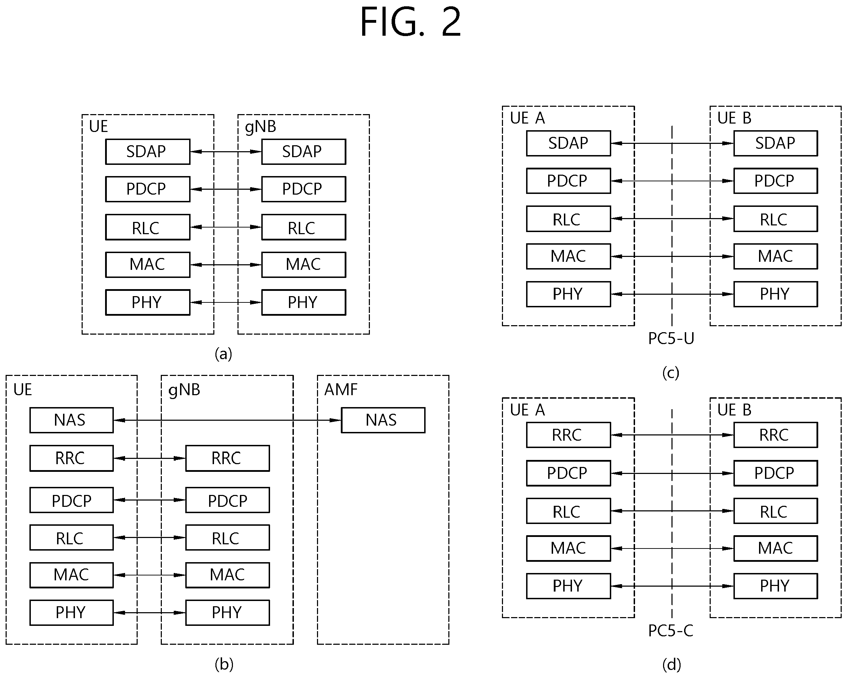

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication. (c) of FIG. 2 shows a radio protocol stack of a user plane for SL communication, and (d) of FIG. 2 shows a radio protocol stack of a control plane for SL communication.

Referring to FIG. 2, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

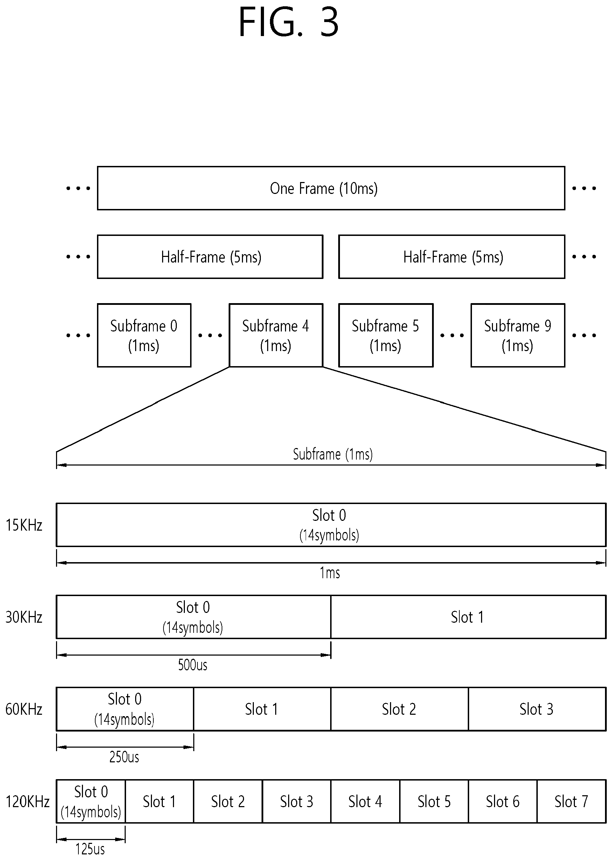

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot ($N^{slot}_{symb}$), a number slots per frame ($N^{rame,u}_{slot}$), and a number of slots per subframe ($N^{subframe,u}_{slot}$) based on an SCS configuration (u), in a case where a normal CP is used.

[Table 1]

| SCS ($15 \times 2^u$) | $N^{slot}_{symb}$ | $N^{Frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

[Table 2]

| SCS ($15 \times 2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

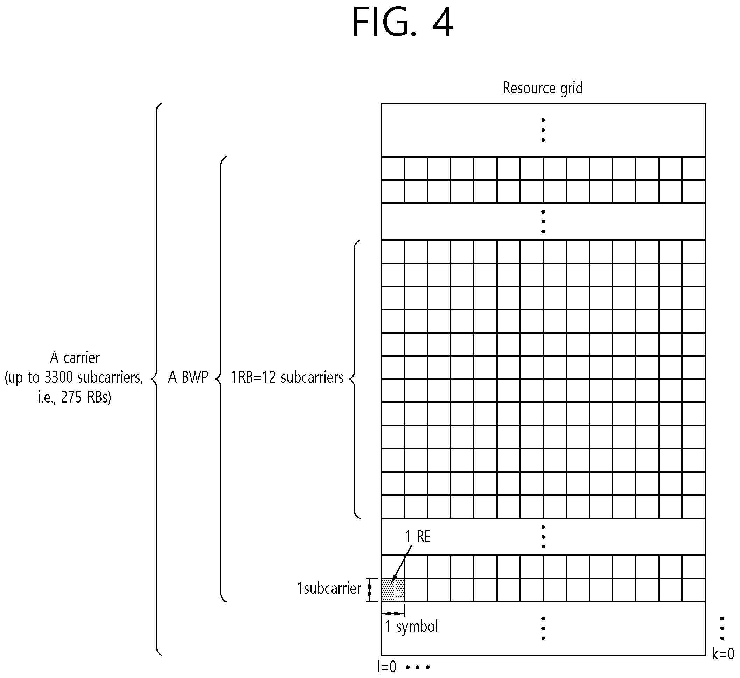

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on).

A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

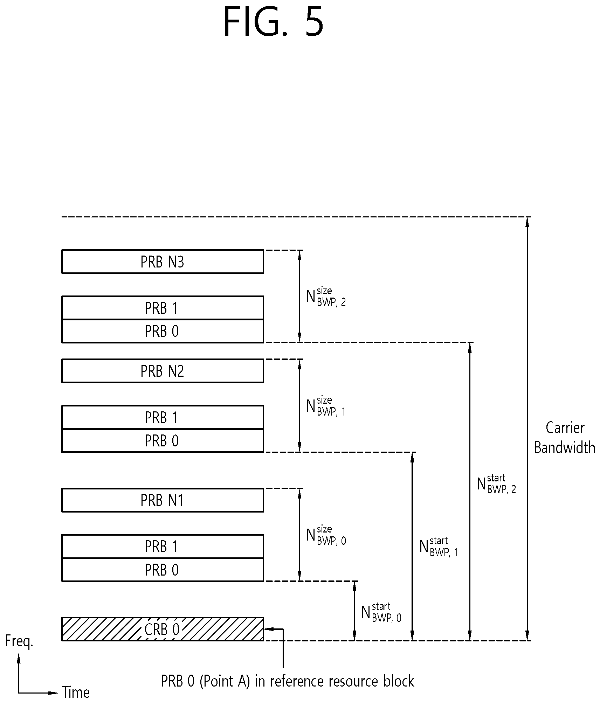

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

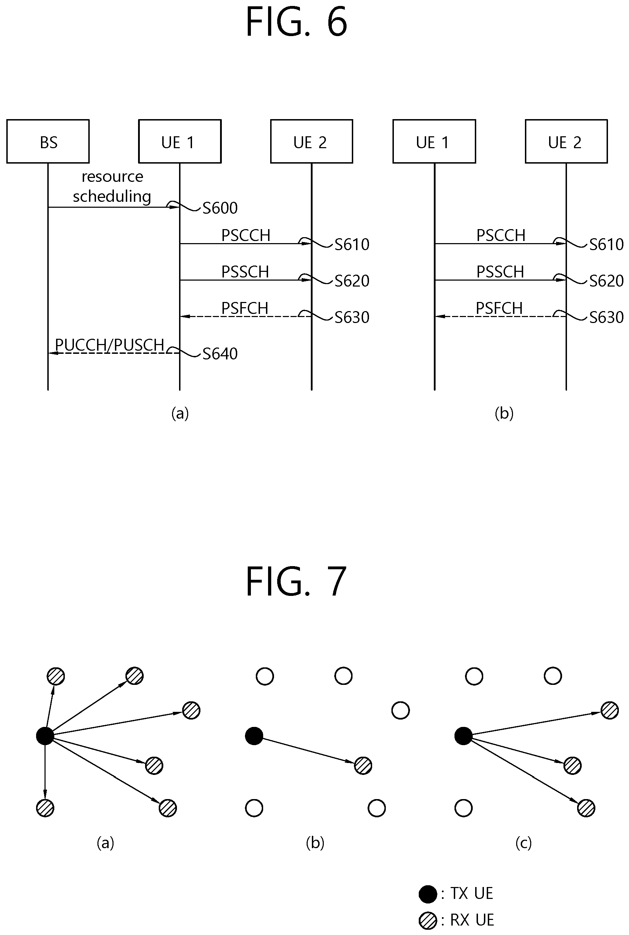

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1st-stage SCI) to a second UE based on the resource scheduling. In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1st-stage SCI) to a second UE by using the resource(s). In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, a first UE may transmit SCI to a second UE on PSCCH. Alternatively, for example, a first UE may transmit two consecutive SCI (e.g., 2-stage SCI) to a second UE on PSCCH and/or PSSCH. In this case, a second UE may decode two consecutive SCIs (e.g., 2-stage SCI) in order to receive the PSSCH from a first UE. In this specification, SCI transmitted on PSCCH may be referred to as a 1st SCI, SCI 1, 1st-stage SCI or 1st-stage SCI format, and SCI transmitted on the PSSCH may be referred to as a 2nd SCI, SCI 2, 2nd-stage SCI or 2nd-stage SCI format. For example, the 1st-stage SCI format may include SCI format 1-A, and the 2nd-stage SCI format may include SCI format 2-A and/or SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling $(\log_2(N^{SL}_{subChannel}(N^{SL}_{subChannel}+1)/2))$ bits when the value of the higher layer parameter sl-MaxNumPerReserve is configured to 2; otherwise ceiling $\log_2(N^{SL}_{subChannel}(N^{SL}_{subChnel}+1)(2N^{SL}_{subChannel}+1)/6)$ bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling $(\log_2 N_{rsv\_period})$ bits, where $N_{rsv\_period}$ is the number of entries in the higher layer parameter sl-ResourceReservePeriodList, if higher layer parameter sl-MultiReserveResource is configured; 0 bit otherwise
- DMRS pattern - ceiling $(\log_2 N_{pattern})$ bits, where $N_{pattern}$ is the number of DMRS patterns configured by higher layer parameter sl-PSSCH-DMRS-TimePatternList
- 2nd-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

[Table 5]

| Value of 2nd-stage SCI format field | 2nd-stage SCI format |
|---|---|
| 00 | SCI format 2-A |
| 01 | SCI format 2-B |

(continued)

| Value of 2nd-stage SCI format field | 2nd-stage SCI format |
|---|---|
| 10 | Reserved |
| 11 | Reserved |

[Table 6]

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

[Table 7]

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 6, in step S630, a first UE may receive the PSFCH. For example, a first UE and a second UE may determine PSFCH resources, and a second UE may transmit HARQ feedback to a first UE using the PSFCH resource.

The following describes a UE procedure to report HARQ-ACK on a sidelink.

A UE may be instructed by SCI format that schedules a reception of PSSCH on one or more subchannels from $N^{PSSCH}_{subch}$ to transmit a PSFCH that includes HARQ-ACK information in response to the reception of a PSSCH. A UE provides HARQ-ACK information including ACK or NACK, or NACK only.

A UE may be provided with the number of slots in a resource pool for PSFCH transmission occasion resources by sl-PSFCH-Period-r16. If the number is zero, PSFCH transmission from a UE is disabled in the resource pool. A UE expects to have a PSFCH transmission occasion resource in slot $t'^{SL}_k$ ($0 \leq k < T'_{max}$) if $k \bmod N^{PSFCH}_{PSSCH} = 0$, where $t'^{SL}_k$ is a slot in the resource pool, and $T'_{max}$ is the number of slots in the resource pool within 10240 msec, and $N^{PSFCH}_{PSSCH}$ is provided in sl-PSFCH-Period-r16. A UE may be instructed by the upper layer not to transmit a PSFCH in response to the reception of a PSSCH. If a UE receives a PSSCH in the resource pool and the HARQ feedback enabled/disabled indicator field included in the associated SCI format 2-A or SCI format 2-B has a value of 1, the UE provides HARQ-ACK information via PSFCH transmission from in resource pool. A UE transmits the PSFCH in a first slot, wherein the first slot is the slot including a PSFCH resource and after the minimum number of slots provided by sl-MinTimeGapPSFCH-r16 of the resource pool after the last slot of the PSSCH reception.

A UE is provided by sl-PSFCH-RB-Set-r16 with $M^{PSFCH}_{PRB,set}$ of PRBs in a resource pool for PSFCH transmissions on PRBs in the resource pool. For the number of PSSCH slots related to a PSFCH slot that is less than or equal to $N_{subch}$ and $N^{PSFCH}_{PSSCH}$, the number of subchannels for the resource pool provided by sl-NumSubchannel, a UE allocates the PRB $[(i+j \cdot N^{PSFCH}_{PSSCH}) \cdot M^{PSFCH}_{subch,slot}, (i+1+j \cdot N^{PSFCH}_{PSSCH}) \cdot M^{PSFCH}_{subch,slot} - 1]$ among the $M^{PSFCH}_{PRB,set}$ PRB for slot i and subchannel j among the PSSCH slots associated with the PSFCH slot. Here, $M^{PHFCH}_{subch,slot} = M^{PSFCH}_{PRB,set} / (N_{subch} \cdot N^{PSFCH}PSSCH)$, $0 \leq i < N^{PSFCH}PSSCH$, $0 \leq j < N_{subch}$, and the allocations starts in ascending order for i and continues in ascending order for j. A UE expects $M^{PSFCH}_{PRB,set}$ to be a multiple of $N_{subch} \cdot N^{PSFCH}_{PSSCH}$.

A UE determines the number of available PSFCH resources for multiplexing HARQ-ACK information included in a PSFCH transmission as $R^{PSFCH}_{PRB,CS} = N^{PSFCH}type \cdot M^{PSFCH}_{subch,slot} \cdot N^{PSFCH}_{CS}$. Here, $N^{PSFCH}_{CS}$ may be the number of cyclic shift pairs for the resource pool, and based on an indication by the higher layer,

- $N^{PSFCH}_{type} = 1$, and $M^{PSFCH}_{subch,slot}$ PRB may be related to the starting subchannel of the corresponding PSSCH,
- $N^{PSFCH}_{type} = N^{PSSCH}_{subch}$ and $N^{PSSCH}_{subch} \cdot M^{PSFCH}_{subch,slot}$ PRB is related to one or more subchannels among $N^{PSSCH}_{subch}$ subchannels of the corresponding PSSCH.

A PSFCH resource is indexed first in ascending order of a PRB indexes among $N^{PSFCH}_{type} \cdot M^{PSFCH}_{subch,slot}$ PRBs, after then, it is indexed in ascending order of cyclic shift pair indexes among $N^{PSFCH}_{CS}$ cyclic shift pairs.

A UE determines an index of a PSFCH resource for a PSFCH transmission in response to the PSSCH reception as $(P_{ID} + M_{ID}) \bmod R^{PSFCH}_{PRB,CS}$. Here, $P_{ID}$ is a physical layer source ID provided by SCI format 2-A or 2-B scheduling a PSSCH reception, $M_{ID}$ is an ID of a UE receiving a PSSCH, indicated from the higher layer when a UE detects SCI format 2-A in which a cast type indicator field value is "01", $M_{ID}$ is 0 otherwise.

A UE determines $m_0$ value for calculating a cyclic shift $\alpha$ value from $N^{PSFCH}_{CS}$ and a cyclic shift pair index which corresponds to a PSFCH resource index using Table 8.

[Table 8]

| $N^{PSFCH}_{CS}$ | $m_0$ | | | | | |
|---|---|---|---|---|---|---|
| | Cyclic shift pair index 0 | Cyclic shift pair index 1 | Cyclic shift pair index 2 | Cyclic shift pair index 3 | Cyclic shift pair index 4 | Cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

As shown in Table 9, when a UE detects SCI format 2-A with a cast type indicator field value of "01" or "10", or as shown in Table 10, when a UE detects SCI format 2-B or SCI format 2-A with a cast type indicator field value of "11", a UE determines $m_{cs}$ the value for calculating a cyclic shift $\alpha$ value. A UE applies one cyclic shift among cyclic shifts to a sequence used in a PSFCH transmission.

[Table 9]

| HARQ-ACK Value | 0 (NACK) | 1 (ACK) |
|---|---|---|
| Sequence cyclic shift | 0 | 6 |

[Table 10]

| HARQ-ACK Value | 0 (NACK) | 1 (ACK) |
|---|---|---|
| Sequence cyclic shift | 0 | N/A |

Hereinafter, a UE procedure for determining a subset of resources to be reported to an higher layer in PSSCH resource selection in sidelink resource allocation mode 2 will be described.

In resource allocation mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission:

- the resource pool from which the resources are to be reported;
- L1 priority, $prio_{TX}$;
- the remaining packet delay budget;
- the number of sub-channels to be used for the PSSCH/PSCCH transmission in a slot, $L_{sub}CH$;
- optionally, the resource reservation interval, $P_{rsvp\_TX}$, in units of msec.
- if the higher layer requests the UE to determine a subset of resources from which the higher layer will select resources for PSSCH/PSCCH transmission as part of re-evaluation or pre-emption procedure, the higher layer provides a set of resources $(r_0, r_1, r_2, ...)$ which may be subject to re-evaluation and a set of resources $(r'_0, r'_1, r'_2, ...)$ which may be subject to pre-emption.
- it is up to UE implementation to determine the subset of resources as requested by higher layers before or after the slot $r''_i - T_3$, where $r''_i$ is the slot with the smallest slot index among $(r_0, r_1, r_2, ...)$ and $(r'_0, r'_1, r'_2, ...)$, and $T_3$ is equal to $T^{SL}_{proc,1}$, where $T^{SL}_{proc,1}$ is defined in slots, and where $\mu_{SL}$ is the SCS configuration of the SL BWP.

The following higher layer parameters affect this procedure:
sl-SelectionWindowList: internal parameter $T_{2min}$ is set to the corresponding value from higher layer parameter sl-SelectionWindowList for the given value of $prio_{TX}$.

- sl-Thres-RSRP-List: this higher layer parameter provides an RSRP threshold for each combination $(p_i, p_j)$, where $p_i$ is the value of the priority field in a received SCI format 1-A and $p_j$ is the priority of the transmission of the UE selecting resources; for a given invocation of this procedure, $p_j = prio_{TX}$.
- sl-RS-ForSensing selects if the UE uses the PSSCH-RSRP or PSCCH-RSRP measurement.
- sl-ResourceReservePeriodList
- sl-SensingWindow: internal parameter $T_0$ is defined as the number of slots corresponding to sl-SensingWindow msec.
- sl-TxPercentageList: internal parameter $X$ for a given $prio_{TX}$ is defined as sl-TxPercentageList ($prio_{TX}$) converted from percentage to ratio.
- sl-PreemptionEnable: if sl-PreemptionEnable is provided, and if it is not equal to 'enabled', internal parameter $prio_{pre}$ is set to the higher layer provided parameter sl-PreemptionEnable.

The resource reservation interval, $P_{rsvp\_TX}$, if provided, is converted from units of msec to units of logical slots, resulting in $P'_{rsvp\_TX}$.

Notation:

$(t'^{SL}_0, t'^{SL}_1, t'^{SL}_2, ...)$ may denote the set of slots which belongs to the sidelink resource pool.

For example, a UE may select a set of candidate resources (Sa) based on Table 8. For example, when resource (re)selection is triggered, a UE may select a candidate resource set (Sa) based on Table 11. For example, when re-evaluation or pre-emption is triggered, a UE may select a candidate resource set (Sa) based on Table 11.

[Table 11]

The following steps are used:

1) A candidate single-slot resource for transmission $R_{x,y}$ is defined as a set of $L_{subCH}$ contiguous sub-channels with sub-channel $x+j$ in slot $t'^{SL}_y$ where $j = 0,...,$ $L_{subCH}$ - 1. The UE shall assume that any set of $L_{subCH}$ contiguous sub-channels included in the corresponding resource pool within the time interval [$n + T_1$, $n + T_2$] correspond to one candidate single-slot resource, where

- selection of $T_1$ is up to UE implementation under $0 \leq T_1 \leq T^{SL}_{proc,1}$ , where $T^{SL}_{proc,1}$ is defined in slots in Table 8.1.4-2 where $\mu_{SL}$ is the SCS configuration of the SL BWP;

- if $T_{2min}$ is shorter than the remaining packet delay budget (in slots) then $T_2$ is up to UE implementation subject to $T_{2min} \leq T_2 \leq$ remaining packet delay budget (in slots); otherwise $T_2$ is set to the remaining packet delay budget (in slots).

The total number of candidate single-slot resources is denoted by $M_{total}$.

2) The sensing window is defined by the range of slots $[n - T_0, n - T^{SL}_{proc,0})$ where $T_0$ is defined above and

$T^{SL}_{proc,0}$ is defined in slots in Table 8.1.4-1 where $\mu_{SL}$ is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots.

3) The internal parameter $Th(p_i,p_j)$ is set to the corresponding value of RSRP threshold indicated by the i-th field in *sl-Thres-RSRP-List,* where $i = p_i + (p_j$ - 1) * 8.

4) The set $S_A$ is initialized to the set of all the candidate single-slot resources.

5) The UE shall exclude any candidate single-slot resource $R_{x,y}$ from the set $S_A$ if it meets all the following conditions:

- the UE has not monitored slot $t'^{SL}_m$ in Step 2.

- for any periodicity value allowed by the higher layer parameter *sl-ResourceReservePeriodList* and a hypothetical SCI format 1-A received in slot $t'^{SL}_m$ with 'Resource reservation period' field set to that periodicity value and indicating all subchannels of the resource pool in this slot, condition c in step 6 would be met.

5a) If the number of candidate single-slot resources $R_{x,y}$ remaining in the set $S_A$ is smaller than $X \cdot M_{total}$, the set $S_A$ is initialized to the set of all the candidate single-slot resources as in step 4.

6) The UE shall exclude any candidate single-slot resource $R_{x,y}$ from the set $S_A$ if it meets all the following conditions:

a) the UE receives an SCI format 1-A in slot $t'^{SL}_m$ , and 'Resource reservation period' field, if present, and 'Priority' field in the received SCI format 1-A indicate the values $P_{rsvp\_RX}$ and $prio_{RX}$, respectively according to Clause 16.4 in [6, TS 38.213];

b) the RSRP measurement performed, according to clause 8.4.2.1 for the received SCI format 1-A, is higher than $Th(prio_{RX}, prio_{TX})$;

c) the SCI format received in slot $t'^{SL}_m$ or the same SCI format which, if and only if the 'Resource reservation period' field is present in the received SCI format 1-A, is assumed to be received in slot(s) $t'^{SL}_{m+q \times P'_{rsvp\_RX}}$ determines according to clause 8.1.5 the set of resource blocks and slots which overlaps with $R_{x,y+j \times P'_{rsvp\ TX}}$ for $q$=1, 2, ..., $Q$ and $j$=0, 1, ..., $C_{resel}$ - 1. Here, $P'_{rsvp\_RX}$ is $P_{rsvp\_RX}$ converted to units of

logical slots according to clause 8.1.7, $Q = \left\lceil \frac{T_{scal}}{P_{rsvp\_RX}} \right\rceil$ if $P_{rsvp\_RX} < T_{scal}$ and $n' - m \leq P'_{rsvp\_RX}$, where

$t'^{SL}_{n'} = n$ if slot $n$ belongs to the set $\left( t'^{SL}_0, t'^{SL}_1, \ldots, t'^{SL}_{T'max-1} \right)$, otherwise slot $t'^{SL}_{n'}$ is the first slot after slot $n$

belonging to the set $\left( t'^{SL}_0, t'^{SL}_1, \ldots, t'^{SL}_{T'max-1} \right)$; otherwise $Q = 1$. $T_{scal}$ is set to selection window size $T_2$ converted to units of msec.

7) If the number of candidate single-slot resources remaining in the set $S_A$ is smaller than $X \cdot M_{total}$, then $Th(p_i,p_j)$ is increased by 3 dB for each priority value $Th(p_i,p_j)$ and the procedure continues with step 4.

(continued)

The following steps are used:

The UE shall report set $S_A$ to higher layers.

If a resource $r_i$ from the set $(r_0, r_1, r_2, ...)$ is not a member of $S_A$, then the UE shall report re-evaluation of the resource $r_i$ to higher layers.

If a resource $r_i'$ from the set $(r_0', r_1', r_2', ...)$ meets the conditions below then the UE shall report pre-emption of the resource $r_i'$ to higher layers

- $r_i'$ is not a member of $S_A$, and

- $r_i'$ meets the conditions for exclusion in step 6, with $Th(prio_{RX}, prio_{TX})$ set to the final threshold after executing steps 1)-7), i.e. including all necessary increments for reaching $X \cdot M_{total}$, and

- the associated priority $prio_{RX}$, satisfies one of the following conditions:

- *sl-PreemptionEnable* is provided and is equal to 'enabled' and $prio_{TX} > prio_{RX}$

- *sl-PreemptionEnable* is provided and is not equal to 'enabled', and $prio_{RX} < prio_{pre}$ and $prio_{TX} > prio_{RX}$

Meanwhile, partial sensing may be supported for power saving of the UE. For example, in LTE SL or LTE V2X, the UE may perform partial sensing based on Tables 12 and 13.

[Table 12]

In sidelink transmission mode 4, when requested by higher layers in subframe n for a carrier, the UE shall determine the set of resources to be reported to higher layers for PSSCH transmission according to the steps described in this Subclause. Parameters $L_{subCH}$ the number of sub-channels to be used for the PSSCH transmission in a subframe, $P_{rsvp\_TX}$ the resource reservation interval, and $prio_{TX}$ the priority to be transmitted in the associated SCI format 1 by the UE are all provided by higher layers.

In sidelink transmission mode 3, when requested by higher layers in subframe n for a carrier, the UE shall determine the set of resources to be reported to higher layers in sensing measurement according to the steps described in this Subclause. Parameters $L_{subCH}$, $P_{rsvp\_TX}$ and $prio_{TX}$ are all provided by higher layers.

$C_{resel}$ is determined by $C_{resel}=10*SL\_RESOURCE\_RESELECTION\_COUNTER$, where SL_RESOURCE_RESELECTION_COUNTER is provided by higher layers.

If partial sensing is configured by higher layers then the following steps are used:

1) A candidate single-subframe resource for PSSCH transmission $R_{x,y}$ is defined as a set of $L_{subCH}$ contiguous sub-channels with sub-channel $x+j$ in subframe $t_y^{SL}$ where $j = 0,...,L_{subCH}-1$. The UE shall determine by its implementation a set of subframes which consists of at least $Y$ subframes within the time interval $[n + T_1, n + T_2]$ where selections of $T_1$ and $T_2$ are up to UE implementations under $T_1 \leq 4$ and $T_{2min}(prio_{TX}) \leq T_2 \leq 100$, if $T_{2min}(prio_{TX})$ is provided by higher layers for $prio_{TX}$, otherwise $20 \leq T_2 \leq 100$. UE selection of $T_2$ shall fulfil the latency requirement and $Y$ shall be greater than or equal to the high layer parameter *minNumCandidateSF*. The UE shall assume that any set of $L_{subCH}$ contiguous sub-channels included in the corresponding PSSCH resource pool within the determined set of subframes correspond to one candidate single-subframe resource. The total number of the candidate single-subframe resources is denoted by $M_{total}$.

2) If a subframe $t_y^{SL}$ is included in the set of subframes in Step 1, the UE shall monitor any subframe $t_{y-k \times P_{step}}^{SL}$ if k-th bit of the high layer parameter *gapCandidateSensing* is set to 1. The UE shall perform the behaviour in the following steps based on PSCCH decoded and S-RSSI measured in these subframes.

3) The parameter $Th_{a,b}$ is set to the value indicated by the i-th *SL-ThresPSSCH-RSRP* field in *SL-ThresPSSCH-RSRP-List* where $i = (a - 1) * 8 + b$.

4) The set $S_A$ is initialized to the union of all the candidate single-subframe resources. The set $S_B$ is initialized to an empty set.

5) The UE shall exclude any candidate single-subframe resource $R_{x,y}$ from the set $S_A$ if it meets all the following conditions:

(continued)

- the UE receives an SCI format 1 in subframe $t_m^{SL}$, and "Resource reservation" field and "Priority" field in the received SCI format 1 indicate the values $P_{rsvp\_RX}$ and $prio_{RX}$, respectively.

- PSSCH-RSRP measurement according to the received SCI format 1 is higher than $Th_{prioTX, prioRX}$.

- the SCI format received in subframe $t_m^{SL}$ or the same SCI format 1 which is assumed to be received in subframe(s) $t_{m+q\times P_{step}\times P_{rsvp\_RX}}^{SL}$ determines according to 14.1.1.4C the set of resource blocks and subframes which overlaps with $R_{x,y+j\times P_{rsvp\_TX}^i}$ for $q$=1, 2, ..., $Q$ and $j$=0, 1, ..., $C_{reser}$-1. Here, $Q = \dfrac{1}{P_{rsvp\_RX}}$ if $P_{rsvp\_RX} < 1$ and $y'$ - $m \le P_{step} \times P_{rsvp\_RX} + P_{step}$, where $t_{y'}^{SL}$ is the last subframe of the $Y$ subframes, and $Q = 1$ otherwise.

6) If the number of candidate single-subframe resources remaining in the set $S_A$ is smaller than $0.2 \cdot M_{total}$, then Step 4 is repeated with $Th_{a,b}$ increased by 3 dB.

[Table 13]

7) For a candidate single-subframe resource $R_{x,y}$ remaining in the set $S_A$, the metric $E_{x,y}$ is defined as the linear average of S-RSSI measured in sub-channels $x+k$ for $k = 0,...,L_{subCH}$-1 in the monitored subframes in Step 2 that can be expressed by $t_{y-P_{step}*j}^{SL}$ for a non-negative integer $j$.

8) The UE moves the candidate single-subframe resource $R_{x,y}$ with the smallest metric $E_{x,y}$ from the set $S_A$ to $S_B$. This step is repeated until the number of candidate single-subframe resources in the set $S_B$ becomes greater than or equal to $0.2 \cdot M_{total}$.

9) When the UE is configured by upper layers to transmit using resource pools on multiple carriers, it shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time.

The UE shall report set $S_B$ to higher layers.

If transmission based on random selection is configured by upper layers and when the UE is configured by upper layers to transmit using resource pools on multiple carriers, the following steps are used:

1) A candidate single-subframe resource for PSSCH transmission $R_{x,y}$ is defined as a set of $L_{subCH}$ contiguous sub-channels with sub-channel $x+j$ in subframe $t_y^{SL}$ where $j$ =0,...,$L_{subCH}$-1. The UE shall

assume that any set of $L_{subCH}$ contiguous sub-channels included in the corresponding PSSCH resource pool within the time interval $[n+T_1,n+T_2]$ corresponds to one candidate single-subframe resource, where selections of $T_1$ and $T_2$ are up to UE implementations under $T_1 \le 4$ and $T_{2min}(prio_{TX}) \le T_2 \le 100$, if $T_{2min}(prio_{TX})$ is provided by higher layers for $prio_{TX}$, otherwise $20 \le T_2 \le 100$. UE selection of $T_2$ shall fulfil the latency requirement. The total number of the candidate single-subframe resources is denoted by $M_{total}$.

2) The set $S_A$ is initialized to the union of all the candidate single-subframe resources. The set $S_B$ is initialized to an empty set.

3) The UE moves the candidate single-subframe resource $R_{x,y}$ from the set $S_A$ to $S_B$ .

4) The UE shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time].

The UE shall report set $S_B$ to higher layers.

Referring to (a) of FIG. 6, in step S640, the first UE may transmit SL HARQ feedback to the base station through the PUCCH and/or the PUSCH.

FIG. 7 shows three cast types, in accordance with an embodiment of the present disclosure. The embodiment of FIG. 7 may be combined with various embodiments of the present disclosure. Specifically, FIG. 7(a) shows broadcast-type SL communication, FIG. 7(b) shows unicast type-SL communication, and FIG. 7(c) shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

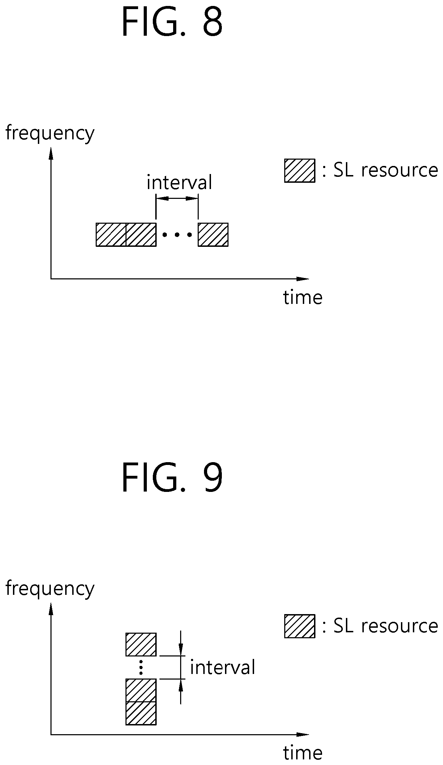

FIG. 8 shows an example of a burst resource according to an embodiment of the present disclosure. The embodiment of FIG. 8 may be combined with various embodiments of the present disclosure.

Referring to FIG. 8, a UE may select/determine a plurality of resources. For example, a UE may select/determine a plurality of resources within a resource pool. For example, the plurality of resources may be continuous resources in the time domain. For example, the plurality of resources may be resources with a time interval (e.g., slot interval) within a threshold value in the time domain.

FIG. 9 shows an example of a burst resource according to an embodiment of the present disclosure. The embodiment of FIG. 9 may be combined with various embodiments of the present disclosure.

Referring to FIG. 9, a UE may select/determine a plurality of resources. For example, a UE may select/determine a plurality of resources within a resource pool. For example, the plurality of resources may be continuous resources in the frequency domain. For example, the plurality of resources may be resources with frequency intervals (e.g., RB intervals or subchannel intervals) within a threshold value in the frequency domain.

Meanwhile, SL communication needs to be performed based on aggregated resources (e.g., burst resources) in NR V2X. For example, an aggregated resource be a contiguous set of resources (e.g., a contiguous set of resources in the time domain and/or frequency domain). For example, an aggregated resources may be a set of resources with an interval within a threshold value (e.g., a set of resources spaced apart within a threshold in the time domain and/or frequency domain). Hereinafter, the reason why aggregated resource-based SL communication is required in NR V2X will be described in detail.

For example, unlike LTE V2X, aperiodic transmission is supported in NR V2X. Compared to periodic transmission, aperiodic transmission has a high possibility of transmission failure due to channel congestion or the like within a packet delay budget (PDB) of a packet from the time of packet generation. Accordingly, a UE may perform burst transmission by selecting aggregated resources for aperiodic transmission, thereby maximizing the transmission success probability within the PDB.

For example, unlike LTE V2X, in NR V2X, packets with strict delay requirements need to be transmitted. Table 14 shows the mapping between Standardized PQI and QoS characteristics.

[Table 14]

| PQI Value | Resource Type | Default Priority Level | Packet Delay Budget | Packet Error Rate | Default Maximum Data Burst Volume | Default Averaging Window | Example Services |
|---|---|---|---|---|---|---|---|
| 21 | GBR | 3 | 20 ms | $10^{-4}$ | N/A | 2000 ms | Platooning between UEs - Higher degree of automation; Platooning between UE and RSU - Higher degree of automation |
| 22 | (NOTE 1) | 4 | 50 ms | $10^{-2}$ | N/A | 2000 ms | Sensor sharing - higher degree of automation |
| 23 | | 3 | 100 ms | $10^{-4}$ | N/A | 2000 ms | Information sharing for automated driving - between UEs or UE and RSU - higher degree of automation |

(continued)

| PQI Value | Resource Type | Default Priority Level | Packet Delay Budget | Packet Error Rate | Default Maximum Data Burst Volume | Default Averaging Window | Example Services |
|---|---|---|---|---|---|---|---|
| 55 | Non-GBR | 3 | 10 ms | $10^{-4}$ | N/A | N/A | Cooperative lane change - higher degree of automation |
| 56 | | 6 | 20 ms | $10^{-1}$ | N/A | N/A | Platooning informative exchange - low degree of automation; Platooning - information sharing with RSU |
| 57 | | 5 | 25 ms | $10^{-1}$ | N/A | N/A | Cooperative lane change - lower degree of automation |
| 58 | | 4 | 100 ms | $10^{-2}$ | N/A | N/A | Sensor information sharing - lower degree of automation |
| 59 | | 6 | 500 ms | $10^{-1}$ | N/A | N/A | Platooning - reporting to an RSU |
| 90 | Delay Critical GBR | 3 | 10 ms | $10^{-4}$ | 2000 bytes | 2000 ms | Cooperative collision avoidance; Sensor sharing - Higher degree of automation; Video sharing - higher degree of automation |
| 91 | (NOTE 1) | 2 | 3 ms | $10^{-5}$ | 2000 bytes | 2000 ms | Emergency trajectory alignment; Sensor sharing - Higher degree of automation |
| NOTE 1: GBR and Delay Critical GBR PQIs can only be used for unicast PC5 communications. | | | | | | | |

Referring to Table 14, the PDB corresponding to PQI 91 is 3 ms. In this case, in the case of 15 kHz, a UE must transmit the corresponding packet within 3 slots. If aggregated resources are not supported, a UE can transmit a packet corresponding to PQI 91 using only one slot, and if the transmission fails, the UE's retransmission opportunity may not be guaranteed. However, if aggregated transmission is supported, a UE can transmit packets corresponding to PQI 91 using 3 consecutive slots, and through this, the transmission success probability can be increased. For convenience of description, the description is based on PQI 91, but the same problem may occur in packets having tight delay requirements, such as PQI 55 and PQI 21.

Meanwhile, aggregated resource selection/reservation may be required to reduce UE power consumption. For example, a UE performing partial sensing or random resource selection (e.g., a power-saving UE) may perform full sensing for a short period of time prior to the selected transmission resource timing (hereinafter referred to as short-term sensing (STS)) in order to avoid resource collision due to aperiodic transmission. For example, since the STS is performed before each selected transmission resource, power consumption of a UE by the STS may increase when the selected resource is temporally distant.

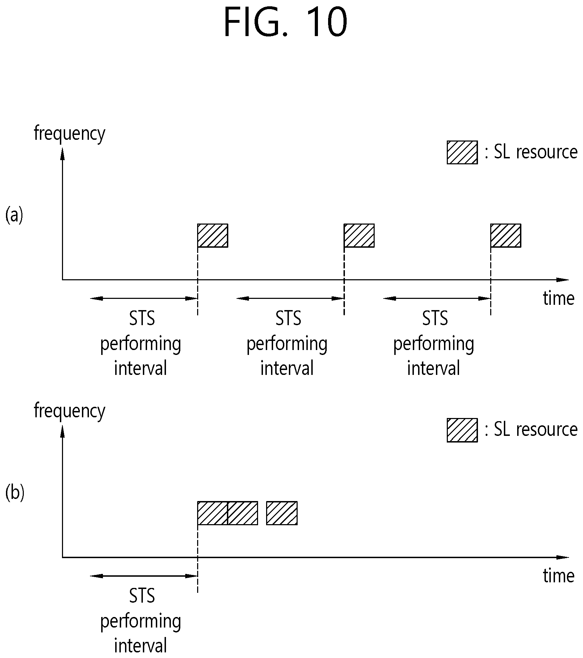

FIG. 10 is a figure for explaining why burst resource reservation is necessary.

Referring to (a) of FIG. 10, when three resources are far apart in time, in order to avoid resource collision due to aperiodic transmission, a UE needs to perform STS for each of the three resources. In this case, power consumption of the UE may increase due to the three STSs.

For example, in order to minimize power consumption of the UE by such an STS, when the UE selects resources based on partial sensing or random selection, the UE selects resources adjacent to each other within a resource selection window. Referring to (b) of FIG. 10, the UE may select three adjacent resources within a resource selection window. In this

17

case, the UE can avoid resource collision due to aperiodic transmission by performing one STS for three resources. Therefore, power consumption of the UE can be saved.

Due to the above reasons, aggregated resource-based SL transmission needs to be allowed in order to reduce power consumption of a UE, ensure reliability of SL communication, and increase resource use efficiency.

On the other hand, in NR-V2X system supporting aperiodic transmissions, (partial) sensing or random selection based resource selection methods of LTE-V2X supporting only periodic transmissions may not be suitable.

According to an embodiment of the present disclosure, a burst transmission method suitable for an NR-V2X system supporting aperiodic transmission and a device supporting the same are proposed. Also, a burst resource selection method suitable for an NR-V2X system supporting aperiodic transmission and a device supporting the same are proposed. Also, a burst resource selection method considering HARQ feedback suitable for an NR-V2X system supporting aperiodic transmission and a device supporting the same are proposed.

For example, a " specific threshold value " may mean a threshold value predefined or (pre-)configured by a higher layer (including an application layer) of the network or base station or UE. The term "specific configuration value" may mean a value predefined or (pre-)configured by the network or higher layers (including application layers) of the base station or UE. The term "configured by the network/base station" may refer to an operation that a base station (pre-) configures to a UE by upper layer RRC signaling, configures/signals to a UE via MAC CE, or signals to a UE via DCI.

For example, a power-saving UE performing partial sensing or random resource selection may perform full sensing for a short time interval prior to the selected transmission resource to avoid resource collisions due to aperiodic transmissions. In the following, STS may refer to short-term sensing.

For example, since STS is performed before each selected transmission resource, UE power consumption by STS may be large if the selected resources are temporally distant. For example, to minimize such STS-induced UE power consumption, when a UE selects resources based on partial sensing or randomly, the UE may select adjacent or temporally close (burst) resources within a resource selection window.

According to an embodiment of the present disclosure, after the initial transmission resource is selected based on partial sensing or randomly, a resource that is temporally close to the initial transmission resource may be preferentially selected when retransmission resources are selected thereafter. In this case, the initial transmission resource and the retransmission resource may be selected such that they do not exist within the same slot.

According to an embodiment of the present disclosure, in the process of resource selection and reselection, if one resource is selected and then one additional resource is selected, the additional resource may be selected from the selected resources within a certain time interval determined by a certain configuration value or a value configured by the network, preferentially over the other resources.

According to an embodiment of the present disclosure, the additional resources may be randomly selected from among the preferentially selected resources with an RSRP lower than a specific threshold. For example, the specific threshold related to RSRP to which RSRP values of selected resources are compared may be configured differently for burst transmission resources than for general non-burst transmission resources. For example, the specific threshold value related to the RSRP may be configured to be higher for burst transmission resources than the value configured for general non-burst transmission resources.

According to an embodiment of the present disclosure, a specific configuration value related to an RSRP offset that is increased when the number of selected resources does not satisfy the ratio that the candidate resources selected should occupy of the total available resources targeted, may be configured differently for burst transmission resources than for general non-burst transmission resources. For example, the specific configuration value related to the RSRP offset may be higher for burst transmission resources than the value configured for general non-burst transmission resources.

According to an embodiment of the present disclosure, a specific threshold related to a target percentage occupied by a selected candidate resource among all available resources may be configured differently for burst transmission resources than for general non-burst transmission resources. For example, the specific threshold related to the target percentage may be configured to be lower for the burst transmission resources than the value configured for the general non-burst transmission resources.

As described above, if UEs select initial transmission resources and retransmission resources as burst type resources that are adjacent or close to each other, the probability of transmission resource collisions between UEs for the burst resources may increase. To address this issue, according to an embodiment of the present disclosure, the burst resource selection may be performed for resources (e.g., different sub-channels) in different/non-overlapping frequency regions between UEs for a particular slot. For example, such selection of different/non-overlapping frequency resources may be selected such that the UEs may be FDMed to each other based on a source ID, destination ID, or UE ID of the transmitted packet.

According to an embodiment of the present disclosure, a UE that selects resources based on partial sensing or randomly selects resources may select resources of the burst type under the following conditions.

- A case in which a transmitting UE, a receiving UE, or neighboring UEs are power saving UEs performing partial sensing or random resource selection
- A case where both periodic transmission and aperiodic transmission are allowed for the resource pool
- A case in which periodic transmission is not allowed for the resource pool
- A case where short-term sensing is allowed for the resource pool
- A case in which re-evaluation or pre-emption checking is configured to be performed on the resource pool.
- A case where the interference or congestion level of the resource pool is below or equal to a specific threshold
- A case in which HARQ ACK/HARQ NACK ratio is greater than or equal to a specific threshold when SL HARQ feedback is enabled
- A case in which ACKs are received from a receiving UE for the transport packet(s), or the number of consecutive ACKs received is greater than or equal to a specific threshold, or the total number of ACKs received is greater than or equal to a specific threshold
- A case where the PDB for a transmission packet is less than or equal to a specific threshold
- A case of initial transmission for a specific TB or performing the number of retransmissions from the initial transmission, by a specific configuration value or a value configured by the network
- A case in which HARQ feedback is disabled for the resource pool
- A case in which the initial selection of transmission resources is randomly selected, and then resource re-evaluation and pre-emption checking are performed
- A case where the transmitting UE or the receiving UE is a UE performing an SL DRX operation

According to an embodiment of the present disclosure, resource selection and transmission of the burst type may be determined based on the priority and requirements such as reliability/latency/distance, service requirements, etc. of a transmission packet.

According to an embodiment of the present disclosure, for a UE performing partial sensing or random resource selection, the time range of reserved resources signaled by SCI may be configured differently from the value configured for a UE performing full sensing. For example, for a UE performing partial sensing or random resource selection, the time range of reserved resources signaled by SCI may be configured to be smaller than the value configured for a UE performing full sensing (e.g., 32 slots). By configuring the resource reservation range to be smaller, a UE may select resources that are adjacent or close to each other.

According to an embodiment of the present disclosure, if HARQ is enabled in the resource pool, the burst-type resources described above are selected and transmitted as resources related to an initial transmission and a blind retransmission, and retransmission resources based on HARQ feedback may be selected sensing-based or randomly, without being limited to the burst resource configuration.

According to an embodiment of the present disclosure, the burst resource may be defined as a set of resources located within a time range corresponding to a specific configuration value or a value configured by the network. In this case, the time range of the burst resources may be greater than or equal to the number of hours/slots corresponding to the number of transmission resources to be selected.

According to an embodiment of the present disclosure, a candidate burst resource for the burst resource to be finally selected may comprise a combination of all frequency resources or subchannels that may be present in each SL slot within the time range and all SL slots present within the time range.

According to an embodiment of the present disclosure, the candidate burst resources may comprise a combination of frequency resources or sub-channels representative of each SL slot within the time range, after selecting one frequency resource or sub-channel as representative of each SL slot.

According to an embodiment of the present disclosure, when selecting a candidate burst resource of a power-saving UE based on partial sensing, the UE may determine an average RSRP value of all transmission resources belonging to the burst resource as the RSRP value of the burst resource, and select the burst resources with RSRP values below a specific threshold as candidate burst resources.

According to an embodiment of the present disclosure, candidate burst resources with an RSRP value less than or equal to a specific threshold may be selected from among combinations of frequency resources/sub-channels of each slot and slots within the time range. In this case, among the candidate burst resources, a burst resource with the lowest RSRP value may be selected from among the candidate burst resources that consist only of transmission resources included within the same slot, or a candidate burst resource may be randomly selected. For example, the number of candidate burst resources selected in the manner described above may be required to satisfy a ratio greater than X, which is a ratio of candidate resources to total available resources, determined by a specific configuration value or a value configured by the network.

According to an embodiment of the present disclosure, in order to reduce the complexity of the above method, a resource with the lowest RSRP for each slot may be selected as a representative resource for that slot, or a resource with an RSRP value lower than a specific threshold value may be randomly selected as a representative resource for that slot.

Thereafter, after the burst resources that consist of the representative resources of each slot and exist within the time range are configured, a burst resource with the lowest RSRP value among the burst resources with a lower burst RSRP value than a specific threshold value may be selected, or a candidate burst resource may be randomly selected. For example, an RSRP threshold used to select a representative resource for each of the slots may be configured differently from an RSRP threshold used to determine each of the burst resources. For example, an RSRP threshold value used to select a representative resource for each of the slots may be configured to be the same as an RSRP threshold value used to determine each of the burst resources. For example, burst resources satisfying the burst resource RSRP for selecting a candidate burst resource may be configured to temporally partially overlap each other. For example, burst resources satisfying the burst resource RSRP for selecting a candidate burst resource may be configured to temporally non-overlap each other.

According to an embodiment of the present disclosure, when multiple candidate burst resources are selected, the temporal interval between the burst resources may be limited to be greater than or equal to the length of the STS window.

According to an embodiment of the present disclosure, for a transmission in which an SL resource pool is configured to HARQ-enabled, and HARQ-enabed is indicated via SCI, when selecting a candidate burst resource, since resources that are at least HARQ RTT apart should be selected, a time range corresponding to the specific configuration value or a value configured by the network, which is the maximum time interval between resources belonging to the candidate burst resource, may be configured to be not less than the HARQ RTT value.

For example, if HARQ feedback is enabled in an SL resource pool and burst transmissions are performed as described above, if a UE makes an initial transmission and then continues to perform transmissions through the burst resource before receiving the linked HARQ feedback, it will waste resources for unnecessary transmissions when the initial transmission was successful.

According to an embodiment of the present disclosure, to address the above issues, SL burst resources and HARQ resources may be configured in TDM format. For example, when multiple burst resources are configured, a HARQ resource may be configured in a time interval between the burst resources. In this case, the HARQ resource is a HARQ resource related to a burst resource that is temporally prior to the HARQ resource, and by receiving the corresponding HARQ feedback after performing the burst transmission, not performing further burst transmission if the transmission is successful, and performing additional burst transmission only if the transmission is unsuccessful, congestion caused by unnecessary transmission may be prevented, and waste of transmission resources used for unnecessary transmission may be minimized. For example, burst resources and HARQ resources may be TDMed in the following order.

Burst resource - HARQ - Burst resource - HARQ ..

According to an embodiment of the present disclosure, the HARQ resource may also consist of burst resources that are temporally adjacent or whose time intervals are within a specific threshold.

According to an embodiment of the present disclosure, a UE may transmit through the burst resource for the initial transmission and blind retransmission, and then receive HARQ feedback through a HARQ resource configured temporally later, and transmit based on conventional partial sensing or random selection-based resource selection, without transmitting through a burst resource for further retransmissions based on the HARQ feedback.

According to an embodiment of the present disclosure, in the TDM configuration of the burst resource and the HARQ resource, one burst resource may be mapped to one PSFCH slot or one HARQ burst resource. For example, as a condition for configuring a burst resource, it may be limited to a resource linked to one PSFCH slot or one HARQ burst transmission resource.

By doing so, interference with other UE communications and HARQ feedback by HARQ feedback may be minimized even in communications between UEs performing random resource selection. For example, for a UE or resource pool performing random resource selection, a (burst) resource may be randomly selected from among burst resources that satisfy a structure that allows TDM of burst resources and HARQ resources as described above.

According to an embodiment of the present disclosure, if a UE selects a plurality of burst resources for power saving, it may configure a PSFCH slot for HARQ feedback to be mapped to any one of the selected burst resources. For example, as described above, to minimize unnecessary transmissions and resource waste, a HARQ feedback for the temporally n-th burst resource may be configured to be located in the first slot (initial slot) within the (n+1)th burst resource.

According to an embodiment of the present disclosure, when a burst resource and a HARQ resource are configured in TDM format, the temporally earliest burst resource after the HARQ resource may need to be configured to satisfy the SL HARQ RTT condition linked to the HARQ feedback.

According to various embodiments of the present disclosure, the proposed burst transmission method, the burst transmission resource selection method, and the HARQ-based burst transmission method may have the effect of minimizing power consumption of power-saving UE operations in an NR-V2X system supporting aperiodic transmission.

For example, for (or, for each of) at least one among elements/parameters of service type (and/or (LCH or service) priority and/or QOS requirements (e.g., latency, reliability, minimum communication range) and/or PQI parameters) (and/or HARQ feedback enabled (and/or disabled) LCH/MAC PDU (transmission) and/or CBR measurement value of a resource pool and/or SL cast type (e.g., unicast, groupcast, broadcast) and/or SL groupcast HARQ feedback option (e.g., NACK only feedback, ACK/NACK feedback, NACK only feedback based on TX-RX distance) and/or SL mode 1 CG type (e.g., SL CG type 1/2) and/or SL mode type (e.g., mode 1/2) and/or resource pool and/or PSFCH resource configured resource pool and/or source (L2) ID (and/or destination (L2) ID) and/or PC5 RRC connection/link and/or SL link and/or (with base station) connection state (e.g., RRC connected state, IDLE state, inactive state) and/or whether an SL HARQ process (ID) and/or (of a transmitting UE or a receiving UE) performs an SL DRX operation and/or whether it is a power saving (transmitting or receiving) UE and/or (from the perspective of a specific UE) case when PSFCH transmission and PSFCH reception (and/or a plurality of PSFCH transmissions (exceeding UE capability)) overlap (and/or a case where PSFCH transmission (and/or PSFCH reception) is omitted) and/or a case where a receiving UE actually (successfully) receives a PSCCH (and/or PSSCH) (re)transmission from a transmitting UE, etc.), whether the rule is applied (and/or the proposed method/rule-related parameter value of the present disclosure) may be specifically (or differently or independently) configured/allowed. In addition, in the present disclosure, "configuration" (or "designation") wording may be extended and interpreted as a form in which a base station informs a UE through a predefined (physical layer or higher layer) channel/signal (e.g., SIB, RRC, MAC CE) (and/or a form provided through pre-configuration and/or a form in which a UE informs other UEs through a predefined (physical layer or higher layer) channel/signal (e.g., SL MAC CE, PC5 RRC)), etc. In addition, in this disclosure, the "PSFCH" wording may be extended and interpreted as "(NR or LTE) PSSCH (and/or (NR or LTE) PSCCH) (and/or (NR or LTE) SL SSB (and/or UL channel/signal))". And, the methods proposed in the present disclosure may be used in combination with each other (in a new type of manner).

According to an embodiment of the present disclosure, when a UE selects a burst transmission resource, the burst transmission resource may be selected more easily by configuring the RSRP threshold used when selecting the burst transmission resource to be higher than when selecting a non-burst transmission resource. In addition, burst transmission resource selection may allow partial sensing to be performed in a resource-efficient manner, thereby improving power savings.

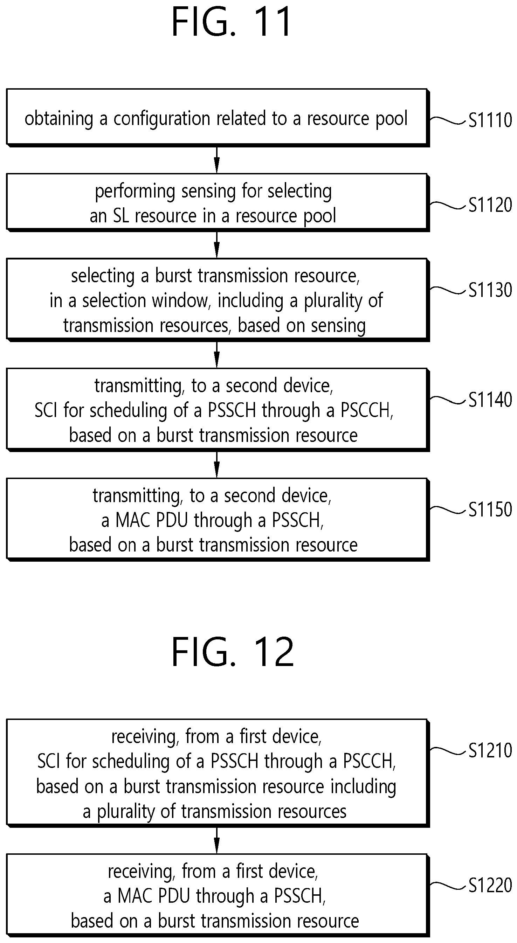

FIG. 11 shows a procedure for a first device to perform wireless communication, according to one embodiment of the present disclosure. The embodiment of FIG. 11 may be combined with various embodiments of the present disclosure.

Referring to FIG. 11, in step S1110, a first device may obtain a configuration related to a resource pool. In step S1120, the first device may perform sensing for selecting a sidelink, SL, resource in the resource pool. In step S1130, the first device may select a burst transmission resource, in a selection window, including a plurality of transmission resources, based on the sensing. For example, a first reference signal received power, RSRP, threshold used in selection for the burst transmission resource may be greater than a second RSRP threshold used in selection for a non-burst transmission resource. In step S1140, the first device may transmit, to a second device, sidelink control information, SCI, for scheduling of a physical sidelink shared channel, PSSCH, through a physical sidelink control channel, PSCCH, based on the burst transmission resource. For example, the SCI may include information related to the burst transmission resource. In step S1150, the first device may transmit, to the second device, a medium access control, MAC, protocol data unit, PDU, through the PSSCH, based on the burst transmission resource.

For example, the burst transmission resource may be randomly selected among resources with a smaller RSRP value than the first RSRP threshold.

For example, an interval between the plurality of transmission resources may be less than or equal to a time threshold.

For example, an interval between an initial resource and a last resource among the plurality of transmission resources may be less than or equal to a time threshold.

For example, the sensing may be partial sensing.

For example, selecting the burst transmission resource may include: selecting a first resource included in the burst transmission resource; and selecting a second resource included in the burst transmission resource, based on the first resource.

For example, the first resource may be selected based on partial sensing.

For example, the first resource may be randomly selected.

For example, a resource located within a time threshold from the first resource may be preferentially selected as the second resource.

For example, the time threshold may be configured by network.

For example, a frequency region of the burst transmission resource may be determined based on at least one of a source identifier, ID, or a destination ID related to the MAC PDU.

For example, a frequency region of the burst transmission resource may be determined based on a user equipment, UE, ID of the first device.

For example, the burst transmission resource may be selected based on a hybrid automatic repeat request, HARQ, feedback being enabled to the resource pool, and the transmission of the MAC PDU may be an initial transmission or a blind retransmission for the MAC PDU.

The embodiments described above may be applied to various devices described below. For example, a processor 102 of a first device 100 may obtain a configuration related to a resource pool. And, the processor 102 of the first device 100 may perform sensing for selecting a sidelink, SL, resource in the resource pool. And, the processor 102 of the first device 100 may select a burst transmission resource, in a selection window, including a plurality of transmission resources, based on the sensing. For example, a first reference signal received power, RSRP, threshold used in selection for the burst transmission resource may be greater than a second RSRP threshold used in selection for a non-burst transmission resource. And, the processor 102 of the first device 100 may control a transceiver 106 to transmit, to a second device 200, sidelink control information, SCI, for scheduling of a physical sidelink shared channel, PSSCH, through a physical sidelink control channel, PSCCH, based on the burst transmission resource. For example, the SCI may include information related to the burst transmission resource. And, the processor 102 of the first device 100 may control the transceiver 106 to transmit, to the second device 200, a medium access control, MAC, protocol data unit, PDU, through the PSSCH, based on the burst transmission resource.

According to an embodiment of the present disclosure, a first device for performing wireless communication may be proposed. For example, the first device may comprise: one or more memories storing instructions; one or more transceivers; and one or more processors connected to the one or more memories and the one or more transceivers. For example, the one or more processors may execute the instructions to: obtain a configuration related to a resource pool; perform sensing for selecting a sidelink, SL, resource in the resource pool; select a burst transmission resource, in a selection window, including a plurality of transmission resources, based on the sensing, wherein a first reference signal received power, RSRP, threshold used in selection for the burst transmission resource may be greater than a second RSRP threshold used in selection for a non-burst transmission resource; transmit, to a second device, sidelink control information, SCI, for scheduling of a physical sidelink shared channel, PSSCH, through a physical sidelink control channel, PSCCH, based on the burst transmission resource, wherein the SCI may include information related to the burst transmission resource; and transmit, to the second device, a medium access control, MAC, protocol data unit, PDU, through the PSSCH, based on the burst transmission resource.

According to an embodiment of the present disclosure, a device adapted to control a first user equipment, UE, may be proposed. For example, the device may comprise: one or more processors; and one or more memories operably connectable to the one or more processors and storing instructions. For example, the one or more processors may execute the instructions to: obtain a configuration related to a resource pool; perform sensing for selecting a sidelink, SL, resource in the resource pool; select a burst transmission resource, in a selection window, including a plurality of transmission resources, based on the sensing, wherein a first reference signal received power, RSRP, threshold used in selection for the burst transmission resource may be greater than a second RSRP threshold used in selection for a non-burst transmission resource; transmit, to a second UE, sidelink control information, SCI, for scheduling of a physical sidelink shared channel, PSSCH, through a physical sidelink control channel, PSCCH, based on the burst transmission resource, wherein the SCI may include information related to the burst transmission resource; and transmit, to the second UE, a medium access control, MAC, protocol data unit, PDU, through the PSSCH, based on the burst transmission resource.

According to an embodiment of the present disclosure, a non-transitory computer-readable storage medium storing instructions may be proposed. For example, the instructions, when executed, may cause a first device to: obtain a configuration related to a resource pool; perform sensing for selecting a sidelink, SL, resource in the resource pool; select a burst transmission resource, in a selection window, including a plurality of transmission resources, based on the sensing, wherein a first reference signal received power, RSRP, threshold used in selection for the burst transmission resource may be greater than a second RSRP threshold used in selection for a non-burst transmission resource; transmit, to a second device, sidelink control information, SCI, for scheduling of a physical sidelink shared channel, PSSCH, through a physical sidelink control channel, PSCCH, based on the burst transmission resource, wherein the SCI may include information related to the burst transmission resource; and transmit, to the second device, a medium access control, MAC, protocol data unit, PDU, through the PSSCH, based on the burst transmission resource.

FIG. 12 shows a procedure for a second device to perform wireless communication, according to an embodiment of the present disclosure. The embodiment of FIG. 12 may be combined with various embodiments of the present disclosure.

Referring to FIG. 12, in step S1210, a second device may receive, from a first device, sidelink control information, SCI, for scheduling of a physical sidelink shared channel, PSSCH, through a physical sidelink control channel, PSCCH, based on a burst transmission resource including a plurality of transmission resources. For example, the SCI may include information related to the burst transmission resource. In step S1220, the second device may receive, from the first device, a medium access control, MAC, protocol data unit, PDU, through the PSSCH, based on the burst transmission resource. For example, the burst transmission resource may be selected in a selection window based on sensing performed in a resource pool, and a first reference signal received power, RSRP, threshold used in selection for the burst transmission resource may be greater than a second RSRP threshold used in selection for a non-burst transmission resource.

For example, an interval between an initial resource and a last resource among the plurality of transmission resources may be less than or equal to a time threshold.

The embodiments described above may be applied to various devices described below. For example, a processor 202 of a second device 200 may control a transceiver 206 to receive, from a first device 100, sidelink control information, SCI, for scheduling of a physical sidelink shared channel, PSSCH, through a physical sidelink control channel, PSCCH, based on a burst transmission resource including a plurality of transmission resources. For example, the SCI may include information related to the burst transmission resource. And, the processor 202 of the second device 200 may control the transceiver 206 to receive, from the first device 100, a medium access control, MAC, protocol data unit, PDU, through the PSSCH, based on the burst transmission resource. For example, the burst transmission resource may be selected in a selection window based on sensing performed in a resource pool, and a first reference signal received power, RSRP, threshold used in selection for the burst transmission resource may be greater than a second RSRP threshold used in selection for a non-burst transmission resource.

According to an embodiment of the present disclosure, a second device for performing wireless communication may be proposed. For example, the second device may comprise: one or more memories storing instructions; one or more transceivers; and one or more processors connected to the one or more memories and the one or more transceivers. For example, the one or more processors may execute the instructions to: receive, from a first device, sidelink control information, SCI, for scheduling of a physical sidelink shared channel, PSSCH, through a physical sidelink control channel, PSCCH, based on a burst transmission resource including a plurality of transmission resources, wherein the SCI may include information related to the burst transmission resource; and receive, from the first device, a medium access control, MAC, protocol data unit, PDU, through the PSSCH, based on the burst transmission resource, wherein the burst transmission resource may be selected in a selection window based on sensing performed in a resource pool, and wherein a first reference signal received power, RSRP, threshold used in selection for the burst transmission resource may be greater than a second RSRP threshold used in selection for a non-burst transmission resource.

For example, an interval between an initial resource and a last resource among the plurality of transmission resources may be less than or equal to a time threshold.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-description, the same reference symbols may denote the same or corresponding hardware blocks, software blocks, or functional blocks unless described otherwise.

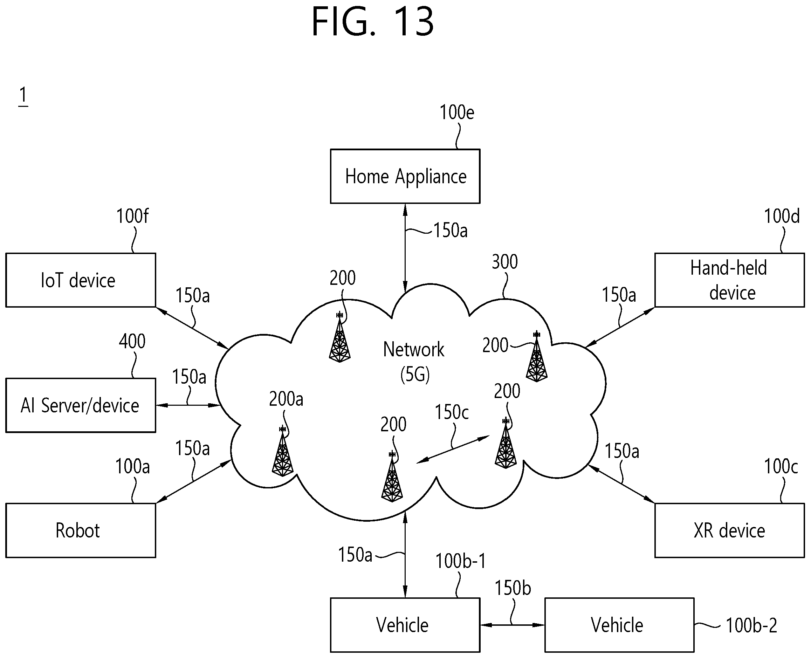

FIG. 13 shows a communication system 1, based on an embodiment of the present disclosure. The embodiment of FIG. 13 may be combined with various embodiments of the present disclosure.

Referring to FIG. 13, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

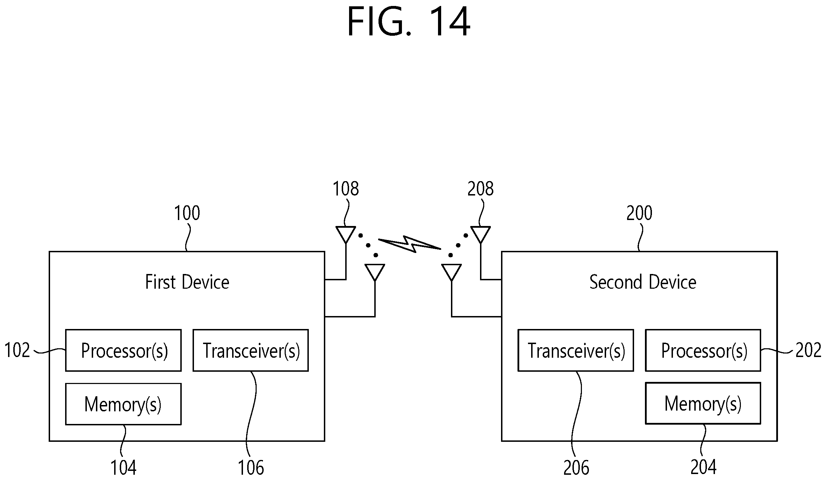

FIG. 14 shows wireless devices, based on an embodiment of the present disclosure. The embodiment of FIG. 14 may be combined with various embodiments of the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

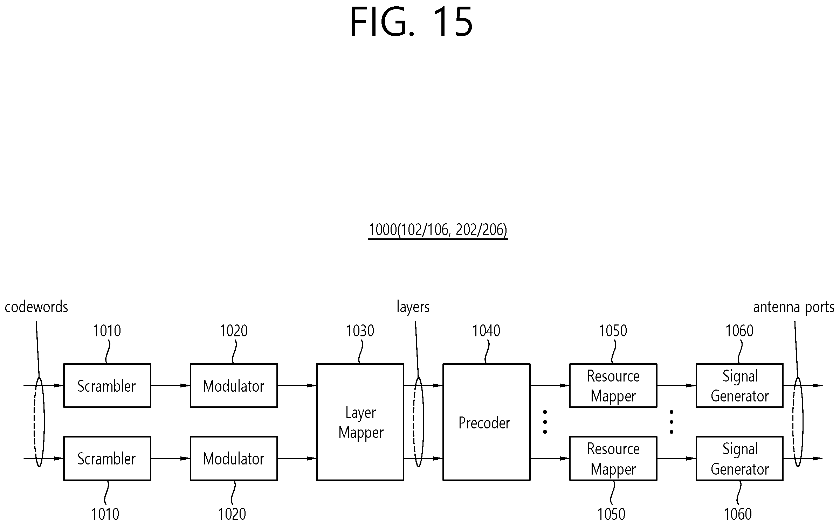

FIG. 15 shows a signal process circuit for a transmission signal, based on an embodiment of the present disclosure. The embodiment of FIG. 15 may be combined with various embodiments of the present disclosure.

Referring to FIG. 15, a signal processing circuit 1000 may include scramblers 1010, modulators 1020, a layer mapper 1030, a precoder 1040, resource mappers 1050, and signal generators 1060. An operation/function of FIG. 15 may be performed, without being limited to, the processors 102 and 202 and/or the transceivers 106 and 206 of FIG. 14. Hardware elements of FIG. 15 may be implemented by the processors 102 and 202 and/or the transceivers 106 and 206 of FIG. 14. For example, blocks 1010 to 1060 may be implemented by the processors 102 and 202 of FIG. 14. Alternatively, the blocks 1010 to 1050 may be implemented by the processors 102 and 202 of FIG. 14 and the block 1060 may be implemented by the transceivers 106 and 206 of FIG. 14.

Codewords may be converted into radio signals via the signal processing circuit 1000 of FIG. 15. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 15. For example, the wireless devices (e.g., 100 and 200 of FIG. 14) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

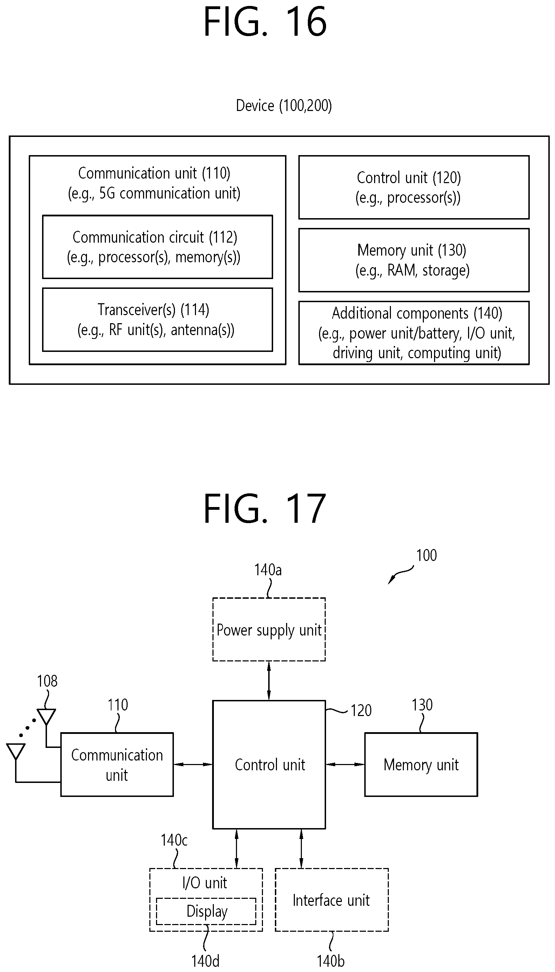

FIG. 16 shows another example of a wireless device, based on an embodiment of the present disclosure. The wireless device may be implemented in various forms according to a use-case/service (refer to FIG. 13). The embodiment of FIG. 16 may be combined with various embodiments of the present disclosure.

Referring to FIG. 16, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 16 will be described in detail with reference to the drawings.

FIG. 17 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 17 may be combined with various embodiments of the present disclosure.

Referring to FIG. 17, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 16, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

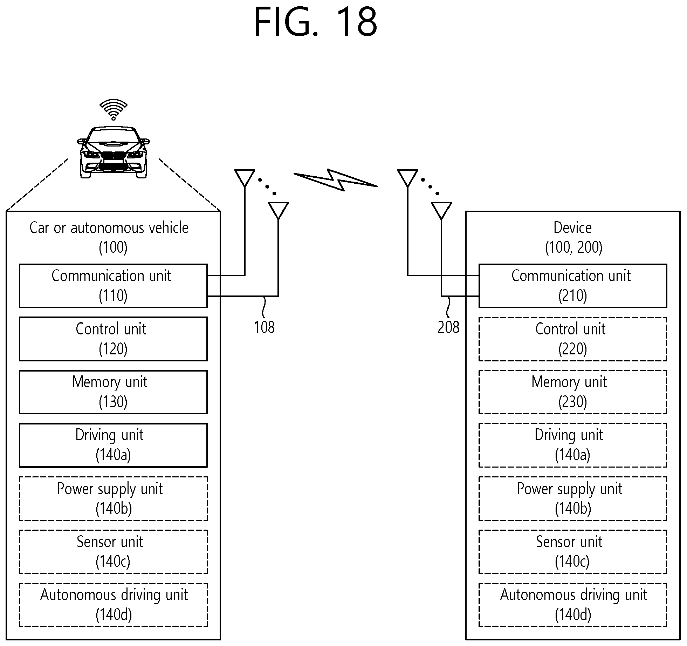

FIG. 18 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 18 may be combined with various embodiments of the present disclosure.

Referring to FIG. 18, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

1. A method for performing, by a first device, wireless communication, the method comprising:

    obtaining a configuration related to a resource pool;
    performing sensing for selecting a sidelink, SL, resource in the resource pool;
    selecting a burst transmission resource, in a selection window, including a plurality of transmission resources, based on the sensing,
    wherein a first reference signal received power, RSRP, threshold used in selection for the burst transmission resource is greater than a second RSRP threshold used in selection for a non-burst transmission resource;
    transmitting, to a second device, sidelink control information, SCI, for scheduling of a physical sidelink shared channel, PSSCH, through a physical sidelink control channel, PSCCH, based on the burst transmission resource, wherein the SCI includes information related to the burst transmission resource; and transmitting, to the second device, a medium access control, MAC, protocol data unit, PDU, through the PSSCH, based on the burst transmission resource.

2. The method of claim 1, wherein the burst transmission resource is randomly selected among resources with a smaller RSRP value than the first RSRP threshold.

3. The method of claim 1, wherein an interval between the plurality of transmission resources is less than or equal to a time threshold.

4. The method of claim 1, wherein an interval between an initial resource and a last resource among the plurality of transmission resources is less than or equal to a time threshold.

5. The method of claim 1, wherein the sensing is partial sensing.

6. The method of claim 1, wherein selecting the burst transmission resource includes:

    selecting a first resource included in the burst transmission resource; and
    selecting a second resource included in the burst transmission resource, based on the first resource.

7. The method of claim 6, wherein the first resource is selected based on partial sensing.

8. The method of claim 6, wherein the first resource is randomly selected.

9. The method of claim 6, wherein a resource located within a time threshold from the first resource is preferentially selected as the second resource.

10. The method of claim 9, wherein the time threshold is configured by network.

11. The method of claim 1, wherein a frequency region of the burst transmission resource is determined based on at least one of a source identifier, ID, or a destination ID related to the MAC PDU.

12. The method of claim 1, wherein a frequency region of the burst transmission resource is determined based on a user equipment, UE, ID of the first device.

13. The method of claim 1, wherein the burst transmission resource is selected based on a hybrid automatic repeat request, HARQ, feedback being enabled to the resource pool, and
wherein the transmission of the MAC PDU is an initial transmission or a blind retransmission for the MAC PDU.

14. A first device for performing wireless communication, the first device comprising:

    one or more memories storing instructions;
    one or more transceivers; and
    one or more processors connected to the one or more memories and the one or more transceivers, wherein the one or more processors execute the instructions to:

        obtain a configuration related to a resource pool;
        perform sensing for selecting a sidelink, SL, resource in the resource pool;
        select a burst transmission resource, in a selection window, including a plurality of transmission resources, based on the sensing,
        wherein a first reference signal received power, RSRP, threshold used in selection for the burst transmission resource is greater than a second RSRP threshold used in selection for a non-burst transmission resource;
        transmit, to a second device, sidelink control information, SCI, for scheduling of a physical sidelink shared channel, PSSCH, through a physical sidelink control channel (PSCCH), based on the burst transmission resource,
        wherein the SCI includes information related to the burst transmission resource; and transmit, to the second device, a medium access control, MAC, protocol data unit, PDU, through the PSSCH, based on the burst transmission resource.

15. A device adapted to control a first user equipment, UE,
the device comprising:

    one or more processors; and
    one or more memories operably connectable to the one or more processors and storing instructions, wherein the one or more processors execute the instructions to:

        obtain a configuration related to a resource pool;
        perform sensing for selecting a sidelink, SL resource in the resource pool;
        select a burst transmission resource, in a selection window, including a plurality of transmission resources, based on the sensing,
        wherein a first reference signal received power, RSRP, threshold used in selection for the burst transmission resource is greater than a second RSRP threshold used in selection for a non-burst transmission resource;
        transmit, to a second UE, sidelink control information, SCI for scheduling of a physical sidelink shared channel, PSSCH, through a physical sidelink control channel, PSCCH, based on the burst transmission resource,
        wherein the SCI includes information related to the burst transmission resource; and transmit, to the second UE, a medium access control, MAC, protocol data unit, PDU, through the PSSCH, based on the burst transmission resource.

**Patentansprüche**

1. Verfahren zum Durchführen einer drahtlosen Kommunikation durch eine erste Vorrichtung, wobei das Verfahren Folgendes umfasst:

   Erhalten einer auf einen Ressourcenpool bezogenen Konfiguration;
   Durchführen einer Erkennung zum Auswählen einer Direktverbindungs, SL (Sidelink), -Ressource im Ressourcenpool;
   Auswählen einer Burst-Übertragungsressource in einem Auswahlfenster, das eine Vielzahl von Übertragungsressourcen enthält, basierend auf der Erkennung,
   wobei ein erster Referenzsignal-Empfangsleistung (RSRP, Reference Signal Received Power) -Schwellenwert, der bei der Auswahl für die Burst-Übertragungsressource verwendet wird, größer ist als ein zweiter RSRP-Schwellenwert, der bei der Auswahl für eine Nicht-Burst-Übertragungsressource verwendet wird;
   Übertragen von Direktverbindungs-Steuerungsinformationen, SCI (Sidelink Control Information), an eine zweite Vorrichtung, um einen gemeinsam genutzten physischen Direktverbindungskanal, PSSCH (Physical Sidelink Shared Channel), zu planen, über einen physikalischen Direktverbindungs-Steuerkanal, PSCCH (Physical Sidelink Control Channel), basierend auf der Burst-Übertragungsressource,
   wobei die SCI Informationen enthalten, die sich auf die Burst-Übertragungsressource beziehen; und
   Übertragen einer Medienzugriffssteuerungs-, MAC (Medium Access Control), -Protokolldateneinheit, PDU (Protocol Data Unit), über den PSSCH an die zweite Vorrichtung basierend auf der Burst-Übertragungsressource.

2. Verfahren nach Anspruch 1, wobei die Burst-Übertragungsressource zufällig unter Ressourcen mit einem kleineren RSRP-Wert als dem ersten RSRP-Schwellenwert ausgewählt wird.

3. Verfahren nach Anspruch 1, wobei ein Intervall zwischen der Vielzahl von Übertragungsressourcen kleiner oder gleich einem Zeitschwellenwert ist.

4. Verfahren nach Anspruch 1, wobei ein Intervall zwischen einer anfänglichen Ressource und einer letzten Ressource aus der Vielzahl der Übertragungsressourcen kleiner oder gleich einem Zeitschwellenwert ist.

5. Verfahren nach Anspruch 1, wobei das Erkennen ein teilweises Erkennen ist.

6. Verfahren nach Anspruch 1, wobei das Auswählen der Burst-Übertragungsressource beinhaltet:

   Auswählen einer ersten Ressource, die in der Burst-Übertragungsressource enthalten ist; und
   Auswählen einer zweiten Ressource, die in der Burst-Übertragungsressource enthalten ist, basierend auf der ersten Ressource.

7. Verfahren nach Anspruch 6, wobei die erste Ressource basierend auf einer teilweisen Erkennung ausgewählt wird.

8. Verfahren nach Anspruch 6, wobei die erste Ressource zufällig ausgewählt wird.

9. Verfahren nach Anspruch 6, wobei eine Ressource, die sich innerhalb eines Zeitschwellenwertes von der ersten Ressource befindet, bevorzugt als zweite Ressource ausgewählt wird.

10. Verfahren nach Anspruch 9, wobei der Zeitschwellenwert durch das Netz konfiguriert wird.

11. Verfahren nach Anspruch 1, wobei ein Frequenzbereich der Burst-Übertragungsressource basierend auf mindestens einer Quellenkennung, ID, oder einer Ziel-ID in Bezug auf die MAC-PDU bestimmt wird.

12. Verfahren nach Anspruch 1, wobei ein Frequenzbereich der Burst-Übertragungsressource basierend auf einer Benutzerausrüstungs, UE, -ID der ersten Vorrichtung bestimmt wird.

13. Verfahren nach Anspruch 1, wobei die Burst-Übertragungsressource basierend darauf ausgewählt wird, dass eine Rückmeldung auf eine hybride automatische Wiederholungsanforderung, HARQ (Hybrid Automatic Repeat Request), an den Ressourcenpool aktiviert ist, und wobei die Übertragung der MAC-PDU eine Erstübertragung oder eine blinde Neuübertragung für die MAC-PDU ist.

**14.** Erste Vorrichtung zum Durchführen einer drahtlosen Kommunikation, wobei die erste Vorrichtung Folgendes umfasst:

einen oder mehrere Speicher, die Anweisungen speichern;
einen oder mehrere Sender-Empfänger; und
einen oder mehrere Prozessoren, die mit dem einen oder den mehreren Speichern und dem einen oder den mehreren Sender-Empfängern verbunden sind, wobei der eine oder die mehreren Prozessoren die Anweisungen zu Folgendem ausführen:

Erhalten einer auf einen Ressourcenpool bezogenen Konfiguration;
Durchführen einer Erkennung zum Auswählen einer Direktverbindungs, SL (Sidelink), -Ressource im Ressourcenpool;
Auswählen einer Burst-Übertragungsressource in einem Auswahlfenster, das eine Vielzahl von Übertragungsressourcen enthält, basierend auf der Erkennung,
wobei ein erster Referenzsignal-Empfangsleistung (RSRP, Reference Signal Received Power) -Schwellenwert, der bei der Auswahl für die Burst-Übertragungsressource verwendet wird, größer ist als ein zweiter RSRP-Schwellenwert, der bei der Auswahl für eine Nicht-Burst-Übertragungsressource verwendet wird;
Übertragen von Direktverbindungs-Steuerungsinformationen, SCI (Sidelink Control Information), an eine zweite Vorrichtung, um einen gemeinsam genutzten physischen Direktverbindungskanal, PSSCH (Physical Sidelink Shared Channel), zu planen, über einen physikalischen Direktverbindungs-Steuerkanal, PSCCH (Physical Sidelink Control Channel), basierend auf der Burst-Übertragungsressource,
wobei die SCI Informationen enthalten, die sich auf die Burst-Übertragungsressource beziehen; und
Übertragen einer Medienzugriffssteuerungs-, MAC (Medium Access Control), -Protokolldateneinheit, PDU (Protocol Data Unit), über den PSSCH an die zweite Vorrichtung basierend auf der Burst-Übertragungsressource.

**15.** Vorrichtung, die zum Steuern einer ersten Benutzerausrüstung, UE, ausgelegt ist, wobei die Vorrichtung umfasst:

einen oder mehrere Prozessoren; und
einen oder mehrere Speicher, die mit dem einen oder den mehreren Prozessoren betriebsfähig verbindbar sind und Anweisungen speichern, wobei der eine oder die mehreren Prozessoren die Anweisungen ausführen zum:

Erhalten einer auf einen Ressourcenpool bezogenen Konfiguration;
Durchführen einer Erkennung zum Auswählen einer Direktverbindungs, SL (Sidelink), -Ressource im Ressourcenpool;
Auswählen einer Burst-Übertragungsressource in einem Auswahlfenster, das eine Vielzahl von Übertragungsressourcen enthält, basierend auf der Erkennung,
wobei ein erster Referenzsignal-Empfangsleistung (RSRP, Reference Signal Received Power) -Schwellenwert, der bei der Auswahl für die Burst-Übertragungsressource verwendet wird, größer ist als ein zweiter RSRP-Schwellenwert, der bei der Auswahl für eine Nicht-Burst-Übertragungsressource verwendet wird;
Übertragen von Direktverbindungs-Steuerungsinformationen, SCI (Sidelink Control Information), an eine zweite UE, um einen gemeinsam genutzten physischen Direktverbindungskanal, PSSCH (Physical Sidelink Shared Channel), zu planen, über einen physikalischen Direktverbindungs-Steuerkanal, PSCCH (Physical Sidelink Control Channel), basierend auf der Burst-Übertragungsressource,
wobei die SCI Informationen enthalten, die sich auf die Burst-Übertragungsressource beziehen; und
Übertragen einer Medienzugriffssteuerungs-, MAC (Medium Access Control), -Protokolldateneinheit, PDU (Protocol Data Unit), über den PSSCH an die zweite UE basierend auf der Burst-Übertragungsressource.

**Revendications**

**1.** Procédé pour réaliser, par un premier dispositif, une communication sans fil, le procédé comprenant les étapes suivantes :

obtenir une configuration liée à un pool de ressources ;
réaliser une détection pour sélectionner une ressource de liaison latérale, SL, dans le pool de ressources ;
sélectionner une ressource de transmission en rafale, dans une fenêtre de sélection comprenant une pluralité de ressources de transmission, sur la base de la détection,

où un premier seuil de puissance reçue de signal de référence, RSRP, utilisé dans la sélection de la ressource de transmission en rafale est supérieur à un deuxième seuil RSRP utilisé dans la sélection d'une ressource de transmission non en rafale ;

transmettre, à un deuxième dispositif, des informations de contrôle de liaison latérale, SCI, pour la planification d'un canal physique partagé de liaison latérale, PSSCH, par l'intermédiaire d'un canal physique de contrôle de liaison latérale, PSCCH, sur la base de la ressource de transmission en rafale,

où les SCI comprennent des informations liées à la ressource de transmission en rafale ; et

transmettre, au deuxième dispositif, une unité de données de protocole, PDU, de contrôle d'accès au support, MAC, par l'intermédiaire du PSSCH, sur la base de la ressource de transmission en rafale.

2. Procédé selon la revendication 1, dans lequel la ressource de transmission en rafale est sélectionnée de manière aléatoire parmi des ressources ayant une valeur RSRP inférieure au premier seuil RSRP.

3. Procédé selon la revendication 1, dans lequel un intervalle entre la pluralité de ressources de transmission est inférieur ou égal à un seuil de temps.

4. Procédé selon la revendication 1, dans lequel un intervalle entre une ressource initiale et une dernière ressource parmi la pluralité de ressources de transmission est inférieur ou égal à un seuil de temps.

5. Procédé selon la revendication 1, dans lequel la détection est une détection partielle.

6. Procédé selon la revendication 1, dans lequel la sélection de la ressource de transmission en rafale comprend les étapes suivantes :

sélectionner une première ressource incluse dans la ressource de transmission en rafale ; et
sélectionner une deuxième ressource incluse dans la ressource de transmission en rafale, sur la base de la première ressource.

7. Procédé selon la revendication 6, dans lequel la première ressource est sélectionnée sur la base d'une détection partielle.

8. Procédé selon la revendication 6, dans lequel la première ressource est sélectionnée de manière aléatoire.

9. Procédé selon la revendication 6, dans lequel une ressource située dans un seuil de temps à partir de la première ressource est de préférence sélectionnée comme deuxième ressource.

10. Procédé selon la revendication 9, dans lequel le seuil de temps est configuré par le réseau.

11. Procédé selon la revendication 1, dans lequel une région de fréquence de la ressource de transmission en rafale est déterminée sur la base d'au moins l'un parmi un identifiant de source, ID, ou un ID de destination lié à la PDU MAC.

12. Procédé selon la revendication 1, dans lequel une région de fréquence de la ressource de transmission en rafale est déterminée sur la base d'un ID d'équipement utilisateur, UE, du premier dispositif.

13. Procédé selon la revendication 1, dans lequel la ressource de transmission en rafale est sélectionnée sur la base d'un retour de demande de répétition automatique hybride, HARQ, étant activé vers le pool de ressources, et dans lequel la transmission de la PDU MAC est une transmission initiale ou une retransmission aveugle pour la PDU MAC.

14. Premier dispositif pour réaliser une communication sans fil, le premier dispositif comprenant :

une ou plusieurs mémoires stockant des instructions ;
un ou plusieurs émetteurs-récepteurs ; et
un ou plusieurs processeurs connectés aux une ou plusieurs mémoires et aux un ou plusieurs émetteurs-récepteurs, où les un ou plusieurs processeurs exécutent les instructions pour :

obtenir une configuration liée à un pool de ressources ; réaliser une détection pour sélectionner une ressource de liaison latérale, SL, dans le pool de ressources ;
sélectionner une ressource de transmission en rafale, dans une fenêtre de sélection comprenant une pluralité de ressources de transmission, sur la base de la détection,

où un premier seuil de puissance reçue de signal de référence, RSRP, utilisé dans la sélection de la ressource de transmission en rafale est supérieur à un deuxième seuil RSRP utilisé dans la sélection d'une ressource de transmission non en rafale ;

transmettre, à un deuxième dispositif, des informations de contrôle de liaison latérale, SCI, pour la planification d'un canal physique partagé de liaison latérale, PSSCH, par l'intermédiaire d'un canal physique de contrôle de liaison latérale, PSCCH, sur la base de la ressource de transmission en rafale,

où les SCI comprennent des informations liées à la ressource de transmission en rafale ; et

transmettre, au deuxième dispositif, une unité de données de protocole, PDU, de contrôle d'accès au support, MAC, par l'intermédiaire du PSSCH, sur la base de la ressource de transmission en rafale.

15. Dispositif adapté pour commander un premier équipement utilisateur, UE, le dispositif comprenant :

un ou plusieurs processeurs ; et

une ou plusieurs mémoires pouvant être connectées de manière opérationnelle aux un ou plusieurs processeurs et stockant des instructions, où les un ou plusieurs processeurs exécutent les instructions pour :

obtenir une configuration liée à un pool de ressources ;

réaliser une détection pour sélectionner une ressource de liaison latérale, SL, dans le pool de ressources ;

sélectionner une ressource de transmission en rafale, dans une fenêtre de sélection comprenant une pluralité de ressources de transmission, sur la base de la détection,

où un premier seuil de puissance reçue de signal de référence, RSRP, utilisé dans la sélection de la ressource de transmission en rafale est supérieur à un deuxième seuil RSRP utilisé dans la sélection d'une ressource de transmission non en rafale ;

transmettre, à un deuxième UE, des informations de contrôle de liaison latérale, SCI, pour la planification d'un canal physique partagé de liaison latérale, PSSCH, par l'intermédiaire d'un canal physique de contrôle de liaison latérale, PSCCH, sur la base de la ressource de transmission en rafale,

où les SCI comprennent des informations liées à la ressource de transmission en rafale ; et

transmettre, au deuxième UE, une unité de données de protocole, PDU, de contrôle d'accès au support, MAC, par l'intermédiaire du PSSCH, sur la base de la ressource de transmission en rafale.

# FIG. 1

# FIG. 2

EP 4 280 729 B1

**(a)**

UE

| SDAP |
| PDCP |
| RLC |
| MAC |
| PHY |

gNB

| SDAP |
| PDCP |
| RLC |
| MAC |
| PHY |

**(b)**

UE

| NAS |
| RRC |
| PDCP |
| RLC |
| MAC |
| PHY |

gNB

| RRC |
| PDCP |
| RLC |
| MAC |
| PHY |

AMF

| NAS |

**(c)**

UE A

| SDAP |
| PDCP |
| RLC |
| MAC |
| PHY |

UE B

| SDAP |
| PDCP |
| RLC |
| MAC |
| PHY |

PC5-U

**(d)**

UE A

| RRC |
| PDCP |
| RLC |
| MAC |
| PHY |

UE B

| RRC |
| PDCP |
| RLC |
| MAC |
| PHY |

PC5-C

# FIG. 3

| ··· | One Frame (10ms) | ··· |

| ··· | Half-Frame (5ms) | Half-Frame (5ms) | ··· |

| ··· | Subframe 0 (1ms) | ··· | Subframe 4 (1ms) | Subframe 5 (1ms) | ··· | Subframe 9 (1ms) | ··· |

Subframe (1ms)

| 15KHz | Slot 0 (14symbols) |

1ms

| 30KHz | Slot 0 (14symbols) | Slot 1 |

500us

| 60KHz | Slot 0 (14symbols) | Slot 1 | Slot 2 | Slot 3 |

250us

| 120KHz | Slot 0 (14symbols) | Slot 1 | Slot 2 | Slot 3 | Slot 4 | Slot 5 | Slot 6 | Slot 7 |

125us

# FIG. 4

Resource grid

A carrier
(up to 3300 subcarriers,
i.e., 275 RBs)

A BWP

1RB=12 subcarriers

1 RE

1subcarrier

1 symbol

l=0 ...

k=0

# FIG. 5

$N_{BWP, 2}^{size}$

$N_{BWP, 1}^{size}$

$N_{BWP, 0}^{size}$

$N_{BWP, 2}^{start}$

$N_{BWP, 1}^{start}$

$N_{BWP, 0}^{start}$

Carrier Bandwidth

PRB N3

PRB 1

PRB 0

PRB N2

PRB 1

PRB 0

PRB N1

PRB 1

PRB 0

CRB 0

Freq.

Time

PRB 0 (Point A) in reference resource block

# FIG. 6

(a)

(b)

# FIG. 7

(a)

(b)

(c)

● : TX UE

⊘ : RX UE

# FIG. 8

# FIG. 9

# FIG. 10

(a)

(b)

# FIG. 11

| obtaining a configuration related to a resource pool | S1110 |

| performing sensing for selecting<br>an SL resource in a resource pool | S1120 |

| selecting a burst transmission resource,<br>in a selection window, including a plurality of<br>transmission resources, based on sensing | S1130 |

| transmitting, to a second device,<br>SCI for scheduling of a PSSCH through a PSCCH,<br>based on a burst transmission resource | S1140 |

| transmitting, to a second device,<br>a MAC PDU through a PSSCH,<br>based on a burst transmission resource | S1150 |

# FIG. 12

| receiving, from a first device,<br>SCI for scheduling of a PSSCH through a PSCCH,<br>based on a burst transmission resource including<br>a plurality of transmission resources | S1210 |

| receiving, from a first device,<br>a MAC PDU through a PSSCH,<br>based on a burst transmission resource | S1220 |

# FIG. 13

EP 4 280 729 B1

# FIG. 14

EP 4 280 729 B1

# FIG. 15

# FIG. 16

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 17

100

140a

Power supply unit

108

110

Communication
unit

120

Control unit

130

Memory unit

140c

I/O unit

Display

Interface unit

140d

140b

# FIG. 18

Car or autonomous vehicle
(100)

| Communication unit (110) |
| Control unit (120) |
| Memory unit (130) |
| Driving unit (140a) |
| Power supply unit (140b) |
| Sensor unit (140c) |
| Autonomous driving unit (140d) |

108

208

Device
(100, 200)

| Communication unit (210) |
| Control unit (220) |
| Memory unit (230) |
| Driving unit (140a) |
| Power supply unit (140b) |
| Sensor unit (140c) |
| Autonomous driving unit (140d) |

EP 4 280 729 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020029340 A1, HE CHAO
- US 2020229171 A1, KHORYAEV ALEXEY